# EUROPEAN PATENT APPLICATION

(11) **EP 4 582 946 A1**
(43) Date of publication of application: **09.07.2025**
(21) Application number: 23867277.8
(22) Date of filing: 05.09.2023
(51) Int. Cl.: G06F 9/50, G06F 9/451

(54) **DEVICE CONTROL METHOD AND ELECTRONIC DEVICE**

(30) Priority: 23.09.2022 CN 202211163151
(71) Applicant: Huawei Technologies Co., Ltd., Shenzhen, Guangdong 518129 (CN)
(72) Inventor: LIANG, Haowei, Shenzhen, Guangdong 518129 (CN); HWANG, Wooseok, Shenzhen, Guangdong 518129 (CN)
(74) Representative: Maiwald GmbH
(86) International application number: PCT/CN2023/116945
(87) International publication number: WO 2024/060986

(57) **Abstract**

A device control method and an electronic device are provided. A first device is connected to a second device. A first interface is displayed on a display of the first device, where the first interface includes at least one desktop component, and the at least one desktop component is used to control a function of the second device. In this manner, convenience of device control can be improved.

## Description

### CROSS-REFERENCE TO RELATED APPLICATIONS

This application claims priority to Chinese Patent Application No. 202211163151.X, filed with the China National Intellectual Property Administration on September 23, 2022 and entitled "DEVICE CONTROL METHOD AND ELECTRONIC DEVICE", which is incorporated herein by reference in its entirety.

### TECHNICAL FIELD

This application relates to the field of electronic technologies, and in particular, to a device control method and an electronic device.

### BACKGROUND

At present, control on a device still depends on an old-fashioned remote control device. For example, a television or a speaker is controlled through a remote control. With development of technologies, a personal mobile device (for example, a mobile phone or a tablet computer) may also be used as a remote control device to control the television, the speaker, or the like, thereby improving remote control convenience. However, when the personal mobile device is used to remotely control another device, a corresponding application (application, APP) usually needs to be installed in the mobile device first, and different apps need to be installed to remotely control different devices. During use, a user needs to find a corresponding app in the mobile device, and control a corresponding device through the app. In this manner, not only memory resources of the mobile device are occupied for installing the apps, but also the user needs to manually find an app to control a target device in the apps, which is cumbersome.

### SUMMARY

An objective of this application is to provide a device control method and an electronic device, so as to improve convenience of controlling the electronic device.

According to a first aspect, a device control method is provided, including: connecting a first device to a second device; and displaying a first interface on a display of the first device, where the first interface includes at least one desktop component, and the at least one desktop component is used to control a function of the second device. In this manner, an app used to control the second device does not need to be installed in the first device, thereby saving memory resources. In addition, when a user needs to control the second device, the user does not need to search for the app used to control the second device from numerous apps of the first device. This reduces operation steps and improves device control efficiency.

In a possible design, when the second device is a plurality of different devices, the at least one desktop component is a plurality of different desktop components, and/or functions controlled by the at least one desktop component are different.

For example, the first device is a mobile phone. When the mobile phone is connected to a head unit, a control component of the head unit is displayed on a home screen of the mobile phone; when the mobile phone is connected to a printer, a control component of the printer is displayed on a home screen of the mobile phone; or the like. Therefore, when a same mobile phone is connected to different devices, a corresponding device may be controlled by using a component on the home screen of the mobile phone, and various apps do not need to be installed in the mobile phone, thereby saving memory resources. In addition, the user does not need to search for an app used to control a corresponding device from the numerous apps of the mobile phone. This reduces operation steps and improves device control efficiency.

In a possible design, before the connecting a first device to a second device, the method further includes: The first device displays a second interface, where the second interface is a local interface of the first device; and the displaying a first interface on a display of the first device includes: when the first device determines that the first device is successfully connected to the second device, automatically switching from the second interface to the first interface. In other words, the first device originally displays the local interface, namely, the second interface, and after being connected to the second device, automatically switches from the second interface to the first interface, and controls the second device by using a desktop component in the first interface. In this manner, the user does not need to search for an app used to control the second device from numerous apps on the mobile phone. This reduces operation steps and improves device control efficiency.

In a possible design, before the displaying a first interface on a display of the first device, the method further includes: The first device displays a lock screen, where the lock screen includes first prompt information, and the first prompt information indicates that the first device is successfully connected to the second device; and the displaying a first interface on a display of the first device includes: The first device displays the first interface in response to an operation in the lock screen. In other words, after connecting to the second device, the first device first displays the lock screen. When the user performs an operation in the lock screen, the first interface is opened, and the second device is controlled by using the desktop component in the first interface. In this manner, the user does not need to search for an app used to control the second device from numerous apps on the mobile phone. This reduces operation steps and improves device control efficiency.

In a possible design, the first interface includes a dock dock bar, and the at least one desktop component is located in the dock dock bar. Generally, a user is used to searching for an icon in a dock bar to enable a corresponding function. Therefore, in this application, in consideration of a use habit of the user, a desktop component used to control the second device is displayed in the dock bar of the first device, to facilitate a user operation and improve user experience.

In a possible design, the first interface is obtained by adding the at least one desktop component to a blank area in the second interface; or the first interface is obtained by displaying the at least one desktop component in a first area after displaying of information in the first area in the second interface is cancelled.

For example, the first device originally displays the local interface, that is, the second interface. After the first device is connected to the second device, the first device switches from the second interface to the first interface. In the first interface, a component used to control the second device may be added to the blank area in the second interface. Alternatively, it is considered that the blank area in the second interface is insufficient or that display information in the second interface is large and disordered, and displaying of some information in the second interface may be canceled, and a component used to control the second device is displayed in a location in which displaying is canceled. In this manner, the user does not need to search for an app used to control the second device from numerous apps of the mobile phone. This reduces operation steps and improves device control efficiency. In addition, the first interface includes both a component used to control the first device and a component used to control the second device, so that a user operation is more convenient.

In a possible design, that the first interface is obtained by displaying the at least one desktop component in a first area after displaying of information in the first area in the second interface is cancelled includes: The first area is an area in which a dock bar in the second interface is located, and the first area includes M icons corresponding to M applications in the first device, where M is a positive integer; and the first interface is obtained by cancelling displaying of N icons in the M icons, and the at least one desktop component is displayed at locations of the N icons, where N is a positive integer less than or equal to M. In other words, the first device cancels displaying of some icons in the dock bar in the second interface, and displays, in a location in which displaying is canceled, a component used to control the second device. In this way, it can be ensured that the second interface is clean and tidy.

In a possible design, the N icons meet at least one of the following conditions: N applications corresponding to the N icons are applications whose use frequencies are lower than a first preset frequency in the M applications; or N applications corresponding to the N icons are not applications recently used by a user; or N applications corresponding to the N icons are not system default applications or user-specified applications. In other words, the first device cancels displaying of some icons in the dock bar in the second interface. For example, the first device cancels displaying of a low-usage icon, a recently unused icon, or an icon that is not a system default icon or a user-specified icon in the dock bar, and displays, in a location in which displaying is canceled, a component used to control the second device. In this way, cleanness of the second interface can be ensured, and an icon that is high-usage, recently used by the user, and that is set by the system or the user can be retained, so that the user can easily find.

In a possible design, the first interface is a previous interface or a next interface of the second interface. For example, the first interface and the second interface are two layers of a plurality of layers of main interfaces of the first device, or are two layers of interfaces of an application in the first device. This is not limited in embodiments of this application. It should be noted that when the first interface is the previous interface or the next interface of the second interface, the user may conveniently switch between the first interface and the second interface, and an operation is convenient.

In a possible design, that the first interface is a previous interface or a next interface of the second interface includes: the first device includes K layers of main interfaces, where K is a positive integer; the second interface is an i^{th} layer in the K layers of main interfaces, where i is a positive integer between 1 and K; and the first interface is a newly added interface between the i^{th} layer and an (i+1)^{th} layer, or a newly added interface between the i^{th} layer and an (i-1)^{th} layer. In other words, the first device originally displays a layer of main interface (namely, the second interface) in the K layers of main interfaces. After the first device is connected to the second device, a layer of main interface (namely, the first interface) is added to the K layers of main interfaces. In this way, the user can conveniently switch between the first interface and the second interface, and an operation is convenient.

In a possible design, the first interface and the second interface overlap, and an overlapping portion includes: a display component that is in the second interface and that is used by a user for a quantity of times greater than a third preset quantity of times, and/or a display component that is in the second interface and that is recently used by the user. In other words, when the first interface is the previous interface or the next interface of the second interface, the first interface retains a component that is in the second interface and that is used by the user for a large quantity of times and/or a component that is recently used by the user. In this way, the user does not need to switch from the first interface to the second interface, and may also control the first device by using these components (the component that is used by the user for a large quantity of times and/or the component that is recently used by the user), and an operation is convenient.

In a possible design, the method further includes: The first device receives an interface switching operation; and the first device switches from the first interface to the second interface on the display in response to the interface switching operation. In other words, when the first interface is the previous interface or the next interface of the second interface, the user may conveniently switch between the first interface and the second interface. For example, interface switching may be implemented by performing a leftward or rightward sliding operation, and an operation is convenient.

In a possible design, the second device is an in-vehicle infotainment system, and the at least one desktop component includes at least one of a first desktop component, a second desktop component, a third desktop component, and a fourth desktop component. The first desktop component is used to control a seat of the in-vehicle infotainment system, the second desktop component is used to control an air conditioner of the in-vehicle infotainment system, the third desktop component is used to control a light of the in-vehicle infotainment system, and the fourth desktop component is used to add another control function for the in-vehicle infotainment system. In other words, when the second device is a head unit, the first device is connected to the head unit. The first device may display a component used to control a seat of the head unit, a component used to control an air conditioner of the head unit, a component used to control a light of the head unit, and the like. The user may further add a component used to control another function of the head unit.

In a possible design, the second device is a speaker, and the at least one desktop component includes at least one of a first desktop component, a second desktop component, a third desktop component, and a fourth desktop component. The first desktop component is used to control volume of the speaker, the second desktop component is used to control the speaker to start or stop playing, the third desktop component is used to control a next song or a previous song of the speaker, and the fourth desktop component is used to add another control function for the speaker. In other words, when the second device is a speaker, the first device is connected to the speaker, and the first device may display a component used to control volume of the speaker, a component used to control starting or stopping of the speaker, a component used to control song playback of the speaker, and the like. The user may further add a component used to control another function of the speaker.

In a possible design, the second device is a printing device, and the at least one desktop component includes at least one of a first desktop component, a second desktop component, a third desktop component, and a fourth desktop component. The first desktop component is used to control starting or stopping of the printing device, the second desktop component is used to control pausing or continuing of the printing device, the third desktop component is used to control a printing color of the printing device, and the fourth desktop component is used to add another control function for the printing device. In other words, when the second device is a printer, the first device is connected to the printer, and the first device may display a component used to control starting or stopping of the printer, a component used to control pausing or continuing of the printer, a component used to control a printing color of the printer, and the like. The user may further add a component used to control another function of the printer.

In a possible design, the method further includes: When the first device displays a third interface, the first device controls, in response to a first operation, the second device to display the third interface; or when the second device displays a fourth interface, the second device controls, in response to a second operation, the first device to display the fourth interface. In other words, the first device may control the second device to display a current interface (for example, a video playback interface or a photo) of the first device, or the second device may control the first device to display a current interface (for example, a video playback interface or a photo) of the second device, that is, display interfaces of the first device and the second device are synchronized. The head unit is used as an example, the second device of the front passenger and the first device in front of the rear seat may display a same interface, to facilitate information sharing.

In a possible design, after the first device controls, in response to the first operation, the second device to display the third interface, the method further includes at least one of the following steps: The first device controls, in response to a third operation, the second device to disable a display touch function; or the first device controls display content in the third interface on the second device in response to a fourth operation (for example, controls pause, play, acceleration, and deceleration of a video if the third interface is a video playback interface). In other words, the display interface of the first device may be the same as that of the second device, and the first device may disable a touch function of the second device or control display content on the second device, to prevent a user on the second device side from controlling the display content.

In a possible design, after the second device controls, in response to the second operation, the first device to display the fourth interface, the method further includes: The second device controls, in response to a fifth operation, the first device to disable a display touch function; or the second device controls display content in the fourth interface on the first device in response to a sixth operation. In other words, the display interface of the first device may be the same as that of the second device, and the second device may disable a touch function of the first device or control display content on the first device. In this way, a user on the first device side may be prevented from controlling the display interface.

In a possible design, the method further includes: The first device displays a first video call screen, where the first video call screen includes an image captured by a first camera on the first device, and the first video call screen includes a button for adding a contact; when receiving an operation on the button, the first device controls the second device to start a second camera on the second device, and transmit an image captured by the second camera to the first device; and the first device adds the image captured by the second camera to the first video call screen. In other words, when the first device performs a video call with another device (for example, a third device), a camera on the second device may be started, and the second device is controlled to transfer an image captured by the camera to the first device. In this way, a user on the second device side is added to the video call screen of the first device, and a video call is performed together. This implements multi-device collaborative interaction.

In a possible design, the method further includes: The second device displays a second video call screen, where the second video call screen includes the image captured by the first camera and the image captured by the second camera. In other words, when the first device performs a video call with another device (for example, the third device), the first device may start a camera on the second device, and control the second device to transfer an image captured by the camera to the first device. In this way, a user on the second device side is added to a video call screen of the first device, and the second device side also performs a video call, and the video call on the second device side includes a video call between the first device, the second device, and the another device (for example, the third device). This implements multi-device collaborative interaction.

In a possible design, the connecting a first device to a second device includes: The first device displays second prompt information when identifying the second device, where the second prompt information indicates whether to connect to the second device; the first device sends a connection request to the second device when receiving an indication for determining to connect to the second device; the second device displays third prompt information after receiving the connection request, where the third prompt information indicates whether to agree to connect to the first device; and the second device is connected to the first device when receiving an agreement indication. In this manner, a secure connection between the first device and the second device can be implemented.

In a possible design, the first device is at least one of a mobile phone, a tablet computer, or a notebook computer, and the second device is at least one of a head unit, a speaker, a television, or a printer. It should be understood that, the first device and the second device are examples herein, but are not limited thereto. The first device and the second device may also be other devices.

According to a second aspect, a communication system is further provided, including a first device and a second device.

The first device is configured to perform the steps of the first device in the method according to the first aspect; and
the second device is configured to perform the steps of the second device in the method according to the first aspect.

According to a third aspect, an electronic device is further provided, including:
a processor, a memory, and one or more programs.

The one or more programs are stored in the memory. The one or more programs include instructions. When the instructions are executed by the processor, the electronic device is enabled to perform the steps of the method according to the first aspect.

According to a fourth aspect, a computer-readable storage medium is further provided. The computer-readable storage medium is configured to store a computer program. When the computer program is run on a computer, the computer is enabled to perform the method according to the first aspect.

According to a fifth aspect, a computer program product is further provided, including a computer program. When the computer program is run on a computer, the computer is enabled to perform the steps of the method according to the first aspect.

According to a sixth aspect, an embodiment of this application further provides a chip. The chip is coupled to a memory in an electronic device, and is configured to invoke a computer program stored in the memory and perform the technical solutions according to the first aspect of embodiments of this application. In embodiments of this application, "coupling" means that two components are directly or indirectly combined with each other.

For beneficial effect of the second aspect to the sixth aspect, refer to beneficial effect of the first aspect. Details are not described.

### BRIEF DESCRIPTION OF DRAWINGS

FIG. 1 is a diagram of a hardware structure of an electronic device according to an embodiment of this application;
FIG. 2 is a diagram of a software structure of an electronic device according to an embodiment of this application;
FIG. 3A to FIG. 3C are diagrams of a display interface when a tablet computer is connected to a head unit according to an embodiment of this application;
FIG. 4 is a diagram of a display interface when a tablet computer is connected to a speaker according to an embodiment of this application;
FIG. 5 is a diagram of a display interface when a tablet computer is connected to a printer according to an embodiment of this application;
FIG. 6A(a) to FIG. 6B(c) are diagrams of a display interface when a mobile phone is connected to a head unit according to an embodiment of this application;
FIG. 6C is a diagram of a display interface when a notebook computer is connected to a head unit according to an embodiment of this application;
FIG. 7 is a diagram of an application scenario according to an embodiment of this application;
FIG. 8 is a schematic flowchart of a device control method according to an embodiment of this application;
FIG. 9A to FIG. 9B(d) are a schematic flowchart of a connection between a first device and a second device according to an embodiment of this application;
FIG. 9C to FIG. 9D(d) are another schematic flowchart of a connection between a first device and a second device according to an embodiment of this application;
FIG. 9E to FIG. 9F(d) are still another schematic flowchart of a connection between a first device and a second device according to an embodiment of this application;
FIG. 10(a) and FIG. 10(b) are a diagram of a lock screen displayed when a first device is connected to a head unit according to an embodiment of this application;
FIG. 11(a) to FIG. 12(b) are diagrams of a display interface when a first device is connected to a head unit according to an embodiment of this application;
FIG. 13 is another schematic flowchart of a device control method according to an embodiment of this application;
FIG. 14 and FIG. 15 are diagrams of a display interface when a first device is connected to a head unit according to an embodiment of this application;
FIG. 16 is a diagram of a procedure of connecting a tablet computer to a head unit according to an embodiment of this application;
FIG. 17A to FIG. 17C are diagrams of a display interface when a first device is connected to a head unit according to an embodiment of this application;
FIG. 18, FIG. 19(a), and FIG. 19(b) are diagrams of controlling a display of a front passenger by a rear-seat tablet computer according to an embodiment of this application;
FIG. 20, FIG. 21(a), and FIG. 21(b) are diagrams of controlling a rear-seat tablet computer by a display of a front passenger according to an embodiment of this application; and
FIG. 22 is a diagram of a structure of an electronic device according to an embodiment of this application.

### DESCRIPTION OF EMBODIMENTS

The following describes some terms in embodiments of this application, to facilitate understanding of a person skilled in the art.

In embodiments of this application, "at least one" includes one or more, and "a plurality of" means two or more. In addition, it should be understood that in descriptions of this specification, terms such as "first" and "second" are merely intended for distinguishing a purpose of description and should not be understood as indication or implication of relative importance, or indication or implication of order. For example, a first device and a second device do not represent an importance degree of the first device and the second device or represent a sequence of the first device and the second device, and are merely used for distinguishing and description. The term "and/or" in embodiments of this application describes only an association relationship and represents that three relationships may exist. For example, A and/or B may represent the following three cases: Only A exists, both A and B exist, and only B exists. In addition, the character "/" in this specification generally indicates an "or" relationship between the associated objects.

The orientation terms mentioned in embodiments of this application, for example, "up", "down", "left", "right", "inside", and "outside", are merely directions based on the accompanying drawings. Therefore, the orientation terms are used to better and more clearly describe and understand embodiments of this application, instead of indicating or implying that a specified apparatus or element should have a specific orientation or be constructed and operated in a specific orientation. Therefore, this cannot be understood as a limitation on embodiments of this application.

Reference to "an embodiment", "some embodiments", or the like described in this specification means that specific features, structures, or characteristics described with reference to the embodiment are included in one or more embodiments of this specification. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

A device control method provided in embodiments of this application is applicable to a system. For example, the system includes the first device and the second device. The first device may be connected to the second device. The first device may be configured to control the second device, and/or the second device may control the first device. For example, the first device may be a convenient electronic device like a mobile phone, a tablet computer, or a notebook computer; or may be a wearable device like a watch or a band; or may be a virtual reality (Virtual Reality, VR) device, an augmented reality (Augmented Reality, AR) device, a mixed reality (Mixed Reality, MR) device. A specific type of the first device is not limited in embodiments of this application. The second device may be the same as or different from the first device. An example in which the first device is different from the second device is used. For example, the first device is a mobile phone or a tablet computer, and the second device is a television, a speaker, a printing device, or an in-vehicle device. In conclusion, a specific type of the second device is not limited in embodiments of this application. For example, the second device may be a convenient electronic device like a mobile phone, a tablet computer, or a notebook computer; or may be a wearable device like a watch or a band; or may be a smart home device like a television, a refrigerator, an air conditioner, or a curtain; or may be an office device like a printing device or a projection device; or may be an in-vehicle device, or the like; or may be a VR device, an AR device, an MR device, or the like.

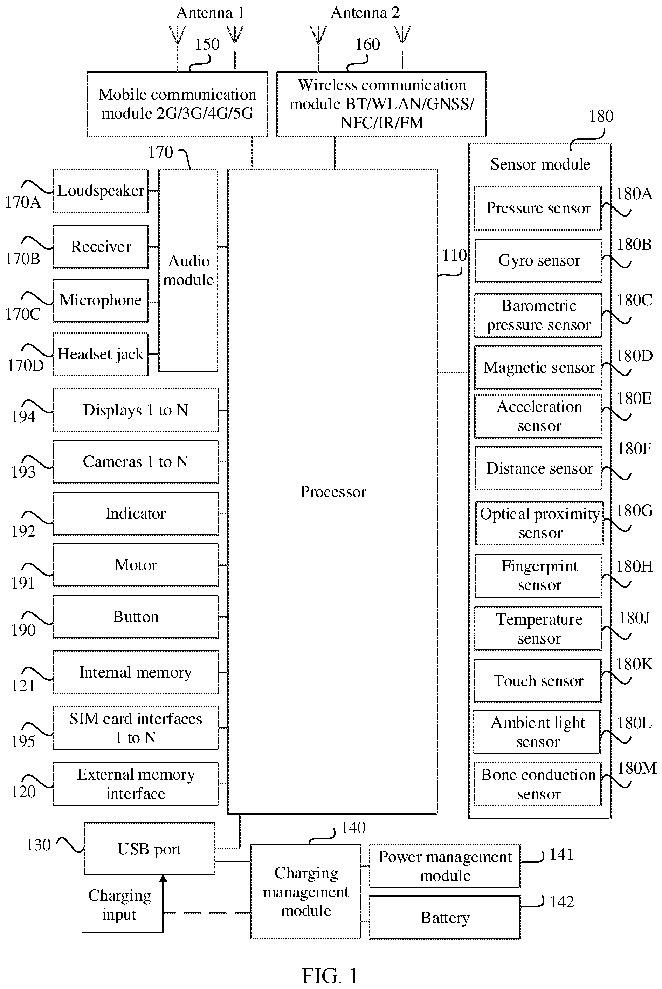

FIG. 1 is a diagram of a structure of an electronic device. The electronic device may be, for example, the first device or the second device in the system. As shown in FIG. 1, the electronic device may include a processor 110, an external memory interface 120, an internal memory 121, a universal serial bus (universal serial bus, USB) port 130, a charging management module 140, a power management module 141, a battery 142, an antenna 1, an antenna 2, a mobile communication module 150, a wireless communication module 160, an audio module 170, a loudspeaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent devices, or may be integrated into one or more processors. The controller may be a nerve center and a command center of the electronic device. The controller may generate an operation control signal based on an instruction operation code and a time sequence signal, to complete control of instruction fetching and instruction execution. A memory may be disposed in the processor 110, and is configured to store instructions and data. In some embodiments, the memory in the processor 110 is a cache. The memory may store instructions or data that has been recently used or cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) port, and/or the like.

The I2C interface is a two-way synchronization serial bus, and includes a serial data line (serial data line, SDA) and a serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be used to perform audio communication, and sample, quantize, and encode an analog signal. In some embodiments, the audio module 170 may be coupled to the wireless communication module 160 through a PCM bus interface. In some embodiments, the audio module 170 may also transmit an audio signal to the wireless communication module 160 through the PCM interface, to implement a function of answering a call through a Bluetooth headset. Both the I2S interface and the PCM interface may be configured to perform audio communication.

The UART interface is a universal serial data bus, and is configured to perform asynchronous communication. The bus may be a two-way communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through a Bluetooth headset.

The MIPI interface may be configured to connect the processor 110 to a peripheral device such as the display 194 or the camera 193. The MIPI interface includes a camera serial interface (camera serial interface, CSI), a display serial interface (display serial interface, DSI), and the like. In some embodiments, the processor 110 communicates with the camera 193 through the CSI interface, to implement a photographing function of the electronic device 100. The processor 110 communicates with the display 194 through the DSI interface, to implement a display function of the electronic device 100.

The GPIO interface may be configured by using software. The GPIO interface may be configured as a control signal, or may be configured as a data signal. In some embodiments, the GPIO interface may be configured to connect the processor 110 to the camera 193, the display 194, the wireless communication module 160, the audio module 170, the sensor module 180, or the like. The GPIO interface may alternatively be configured as an I2C interface, an I2S interface, the UART interface, an MIPI interface, or the like.

The USB port 130 is an interface that conforms to a USB standard specification, and may be specifically a mini USB port, a micro USB port, a USB Type C port, or the like. The USB port 130 may be configured to connect to a charger to charge the electronic device 100, and may also be configured to transmit data between the electronic device 100 and a peripheral device, or may be configured to connect to a headset for playing audio through the headset. Alternatively, the port may be configured to connect to another electronic device, for example, an AR device.

It may be understood that an interface connection relationship between the modules that is shown in this embodiment of the present invention is only an example for description, and does not constitute a limitation on a structure of the electronic device 100. In other embodiments of this application, the electronic device 100 may alternatively use an interface connection mode different from that in the foregoing embodiment, or use a combination of a plurality of interface connection modes.

A wireless communication function of the electronic device may be implemented through the antenna 1, the antenna 2, the mobile communication module 150, the wireless communication module 160, the modem processor, the baseband processor, and the like. The antenna 1 and the antenna 2 are configured to transmit and receive an electromagnetic wave signal. Each antenna in the electronic device may be configured to cover one or more communication frequency bands. Different antennas may be multiplexed, to improve antenna utilization. For example, the antenna 1 may be multiplexed as a diversity antenna in a wireless local area network. In some other embodiments, the antenna may be used in combination with a tuning switch.

The mobile communication module 150 may provide a solution that is applied to the electronic device and that includes wireless communication such as 2G/3G/4G/5G. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 may be disposed in a same device as at least some modules of the processor 110.

The wireless communication module 160 may provide a wireless communication solution that is applied to the electronic device, and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more devices integrating at least one communication processor module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, in the electronic device, the antenna 1 is coupled to the mobile communication module 150, and the antenna 2 is coupled to the wireless communication module 160, so that the electronic device can communicate with a network and another device according to a wireless communication technology.

The display 194 is configured to display a display interface of an application, and the like. The display 194 includes a display panel. In some embodiments, the electronic device may include one or more displays 194.

The electronic device 100 may implement a photographing function through the ISP, the camera 193, the video codec, the GPU, the display 194, the application processor, and the like. The ISP is configured to process data fed back by the camera 193.

The internal memory 121 may be configured to store computer-executable program code. The executable program code includes instructions. The processor 110 runs the instructions stored in the internal memory 121, to perform various function applications and data processing of the electronic device. The internal memory 121 may include a program storage area and a data storage area. The program storage area may store an operating system, software code of at least one application, and the like. The data storage area may store data (for example, an image or a video) generated in a process of using the electronic device, and the like. In addition, the internal memory 121 may include a high-speed random access memory, or may include a nonvolatile memory, for example, at least one magnetic disk storage device, a flash storage device, or a universal flash storage.

The external memory interface 120 may be configured to connect to an external memory card, for example, a micro SD card, to extend a storage capability of the electronic device. The external memory card communicates with the processor 110 through the external memory interface 120, to implement a data storage function. For example, files such as pictures or videos are stored in the external memory card.

The electronic device may implement an audio function, for example, music playing and recording, by using the audio module 170, the loudspeaker 170A, the receiver 170B, the microphone 170C, the headset jack 170D, the application processor, and the like.

The audio module 170 is configured to convert digital audio information into an analog audio signal output, and is also configured to convert an analog audio input into a digital audio signal. The audio module 170 may be further configured to encode and decode an audio signal. In some embodiments, the audio module 170 may be disposed in the processor 110, or some functional modules in the audio module 170 are disposed in the processor 110.

The loudspeaker 170A, also referred to as a "loudspeaker", is configured to convert an audio electrical signal into a sound signal. The electronic device 100 may listen to music by using one or more loudspeakers 170A, or may be used in a speaker scenario, for example, answering a hands-free call.

The receiver 170B, also referred to as an "earpiece", is configured to convert an audio electrical signal into a sound signal, and there may be one or more receivers 170B. When a call is answered or voice information is received through the electronic device 100, the receiver 170B may be put close to a human ear to listen to a voice.

The microphone 170C, also referred to as a "mike" or a "mic", is configured to convert a sound signal into an electrical signal.

The headset jack 170D is configured to connect to a wired headset.

The pressure sensor 180A is configured to sense a pressure signal, and can convert the pressure signal into an electrical signal. In some embodiments, the pressure sensor 180A may be disposed on the display 194.

The gyro sensor 180B may be configured to determine a motion gesture of the electronic device. In some embodiments, angular velocities of the electronic device around the three axes (that is, the x-axis, the y-axis, and the z-axis) may be determined by using the gyro sensor 180B. The gyro sensor 180B may be configured to implement image stabilization during photographing.

The barometric pressure sensor 180C is configured to measure barometric pressure. In some embodiments, the electronic device calculates an altitude based on a barometric pressure value measured by the barometric pressure sensor 180C, to assist in positioning and navigation.

The magnetic sensor 180D includes a Hall sensor. The electronic device may detect opening and closing of a flip cover by using the magnetic sensor 180D.

The acceleration sensor 180E may detect accelerations in various directions (usually on three axes) of the electronic device. When the electronic device is static, magnitude and a direction of gravity may be detected.

The distance sensor 180F is configured to measure a distance. The electronic device may measure a distance in an infrared or laser manner.

The optical proximity sensor 180G may include, for example, a light-emitting diode (LED) and an optical detector, for example, a photodiode. The light-emitting diode may be an infrared light-emitting diode. The electronic device emits infrared light outwards through the light-emitting diode. The electronic device uses the photodiode to detect infrared reflected light from a nearby object. When detecting sufficient reflected light, the electronic device may determine that there is an object near the electronic device. When insufficient reflected light is detected, the electronic device may determine that there is no object near the electronic device.

The ambient light sensor 180L is configured to sense ambient light brightness. The electronic device may adaptively adjust brightness of the display 194 based on the sensed ambient light brightness.

The fingerprint sensor 180H is configured to collect a fingerprint.

The temperature sensor 180J is configured to detect a temperature.

The touch sensor 180K is also referred to as a touch panel. The touch sensor 180K may be disposed on the display 194, and the touch sensor 180K and the display 194 constitute a touchscreen, which is also referred to as a "touch screen". The touch sensor 180K is configured to detect a touch operation performed on or near the touch sensor. The touch sensor may transfer the detected touch operation to the application processor to determine a type of the touch event.

The bone conduction sensor 180M may obtain a vibration signal. In some embodiments, the bone conduction sensor 180M may obtain a vibration signal of a vibration bone of a human vocal-cord part.

The button 190 includes a power button, a volume button, and the like. The button 190 may be a mechanical button, or may be a touch button. The electronic device may receive a button input, and generate a button signal input related to user settings and function control of the electronic device. The motor 191 may generate a vibration prompt. The motor 191 may be configured to provide an incoming call vibration prompt and a touch vibration feedback. The indicator 192 may be an indicator light, and may be configured to indicate a charging status and a power change, or may be configured to indicate a message, a missed call, a notification, and the like. The SIM card interface 195 is configured to connect to a SIM card. The SIM card may be inserted into the SIM card interface 195 or removed from the SIM card interface 195, to implement contact with or separation from the electronic device.

It may be understood that components shown in FIG. 1 do not constitute a specific limitation on the electronic device. The electronic device in embodiments of the present invention may include more or fewer components than those in FIG. 1. In addition, a combination/connection relationship between the components in FIG. 1 may also be adjusted and modified.

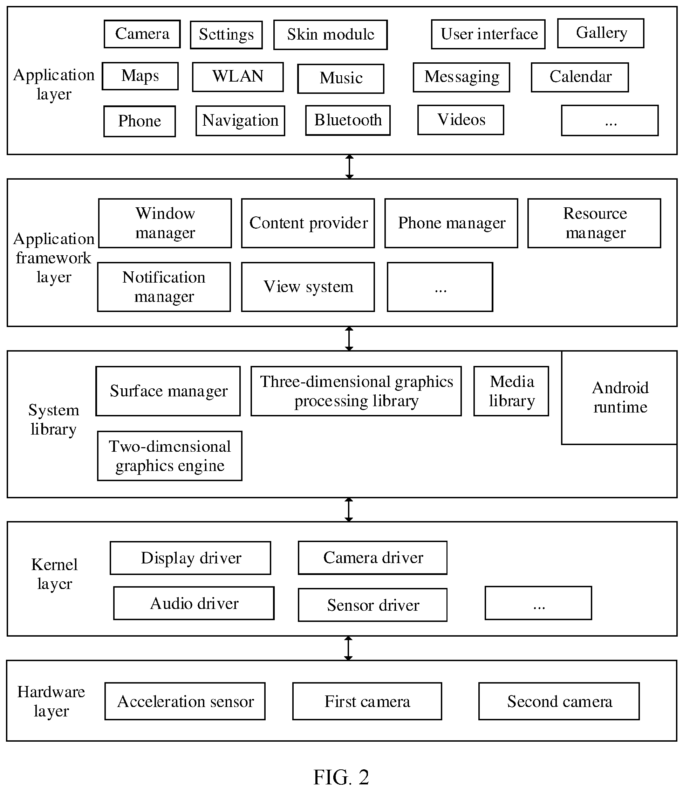

FIG. 2 is a diagram of a software structure of an electronic device according to an embodiment of this application.

As shown in FIG. 2, a software structure of an electronic device may be a hierarchical structure, and the electronic device may be a first device or a second device in a system. In the layered architecture, software is divided into several layers, and each layer has a clear role and task. The layers communicate with each other through a software interface. The layered architecture may be, for example, an event-driven architecture, a microkernel architecture, a microservice architecture, or a cloud architecture. In embodiments of this application, an Android^{®} system of the layered architecture is used as an example to describe the software structure of the electronic device. In some embodiments, the Android^{®} system is divided into five layers: an application layer, an application framework layer, an Android runtime (Android runtime) and system library, a kernel layer, and a hardware layer from top to bottom.

As shown in FIG. 2, an application layer may include a series of application packages such as Camera, Gallery, Calendar, Phone, Maps, Navigation, WLAN, Bluetooth, Music, and Videos.

The application framework layer provides an application programming interface (application programming interface, API) and a programming framework for an application at the application layer. The application framework layer includes some predefined functions. As shown in FIG. 2, the application framework layer may include a window manager, a content provider, a view system, a phone manager, a resource manager, a notification manager, and the like. The window manager is configured to manage a window program. The window manager may obtain a size of a display, determine whether there is a status bar, perform screen locking, take a screenshot, and the like. The content provider is configured to: store and obtain data, and enable the data to be accessed by an application. The data may include a video, an image, an audio, calls that are made and answered, a browsing history and bookmarks, an address book, and the like. The view system includes visual controls such as a control used to display a text and a control used to display an image. The view system may be configured to construct an application. A display interface may include one or more views. For example, a display interface including an SMS message notification icon may include a text display view and an image display view. The phone manager is configured to provide a communication function of the electronic device, for example, management of a call status (including answering, declining, or the like). The resource manager provides various resources such as a localized character string, an icon, an image, a layout file, and a video file for an application. The notification manager enables an application to display notification information in a status bar, and may be configured to convey a notification message. The notification manager may automatically disappear after a short pause without requiring a user interaction. For example, the notification manager is configured to notify download completion, give a message notification, and the like. The notification manager may alternatively be a notification that appears in a top status bar of a system in a form of a graph or a scroll bar text, for example, a notification of an application that is run on a background, or may be a notification that appears on a screen in a form of a dialog window. For example, text information is displayed in the status bar, an alert tone is made, the electronic device vibrates, or the indicator light blinks.

The Android runtime includes a kernel library and a virtual machine. The Android runtime is responsible for scheduling and management of the Android system. The kernel library includes two parts: a function that needs to be invoked in Java language and a kernel library of Android. The application layer and the application framework layer run on the virtual machine. The virtual machine executes Java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (Media Library), a three-dimensional graphics processing library (for example, OpenGL ES), and a 2D graphics engine (for example, SGL). The surface manager is configured to manage a display subsystem, and provide fusion of 2D and 3D layers for a plurality of applications. The media library supports playback and recording in a plurality of commonly used audio and video formats, static image files, and the like. The media library may support a plurality of audio and video coding formats, for example, MPEG-4, H.264, MP3, AAC, AMR, JPG, and PNG. The three-dimensional graphics processing library is configured to implement three-dimensional graphics drawing, image rendering, compositing, layer processing, and the like. The 2D graphics engine is a drawing engine for 2D drawing.

The kernel layer is a layer between hardware and software. The kernel layer includes at least a display driver, a camera driver, an audio driver, and a sensor driver.

The hardware layer includes a plurality of cameras. For example, a first camera and a second camera may further include other hardware such as a sensor (for example, an acceleration sensor) and a display (not shown in the figure).

It may be understood that the software structure shown in FIG. 2 does not constitute a specific limitation on the software structure of the electronic device. A software structure of the electronic device in this embodiment the present invention may include more or fewer modules than those in FIG. 2, for example, more or fewer layers than those in FIG. 2, or a layer includes more or fewer modules than those in FIG. 2. In addition, a combination/connection relationship between the modules in FIG. 2 may also be adjusted and modified.

For ease of understanding, the following describes technical solutions provided in embodiments of this application with reference to the accompanying drawings.

To improve convenience of device control, an embodiment of this application provides a device control method. The method is applicable to a system including a first device and a second device. The first device is connected to the second device, a first interface is displayed on a display of the first device, and the first interface includes at least one desktop component (Widget) used to control a function of the second device. When second devices are different devices, the at least one desktop component displayed on the first device varies, and/or a function controlled by the at least one desktop component varies. In this way, a user may control the second device by using the desktop component displayed on the first device, and does not need to install various apps, thereby saving memory resources. In addition, when the first device is connected to different second devices, desktop components displayed on the first device are different, and the user may control the corresponding second device by using the different desktop components, and does not need to search for an app that needs to control the target device in the numerous apps of the first device. This saves operation steps.

For example, the desktop component (Widget) may include various display components such as an icon and a widget. The icon includes, for example, an application icon, a function icon, a tool icon, and a service icon. A widget may be understood as a display area. Optionally, the display area may have a specific shape, for example, a square, a rounded square, or a rounded rectangle. Generally, one widget may display related information about an application, a function, or a service. For example, one widget displays information recorded in Notepad, and another widget displays related information about an email application. Certainly, in this application, a one-to-one relationship between a widget and an application, a function, or a service is not limited, or may be a one-to-many relationship. In addition, icons, widgets, and the like are described in the following by using accompanying drawings as examples.

For example, when the second device is an in-vehicle device, the first device is connected to the in-vehicle device, and the first device displays a desktop component A. The user may control a function of the in-vehicle device by using the desktop component A, for example, in-vehicle temperature adjustment, seat adjustment, and in-vehicle light adjustment.

For another example, when the second device is a printing device, the first device is connected to the printing device, and the first device displays a desktop component B. The user may control a function of the printing device by using the desktop component B, for example, starting printing, ending printing, and printing a color.

For ease of understanding, the following first briefly describes the technical solutions of this application by using different application scenarios as examples. The second device varies in different application scenarios.

**Application scenario 1: The first device is a tablet computer, and the second device is an in-vehicle device.**

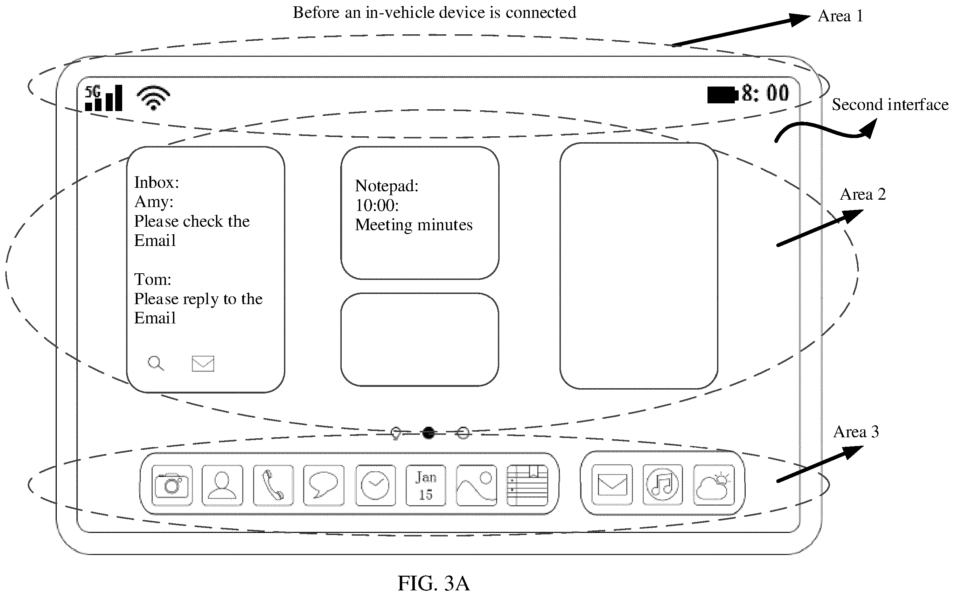

For example, with reference to FIG. 3A, a second interface is displayed on a tablet computer, and the second interface is a local interface of the tablet computer, for example, a desktop of the tablet computer. The second interface includes three areas: an area 1, an area 2, and an area 3. The area 1 is a status bar on the top of the screen, and displays time information, wireless signal information, battery level information, operator information, and the like. The area 2 is located in the middle of the screen, and includes various widgets (for details about the widgets, refer to the foregoing descriptions). For example, one widget displays information about a mailbox on the tablet computer (for example, including an inbox), and another widget displays information about Notepad on the tablet computer (for example, meeting minutes taking at 10:00). The area 3 (also referred to as an area in which a dock dock bar is located) is located at the bottom of the screen, and includes various icons, such as icons of various applications such as Phone, Contacts, and Music. It may be understood that FIG. 3A is merely an example of the second interface, and the second interface may alternatively be an interface of another style, or in short, may be the local interface of the tablet computer. This is not limited in embodiments of this application.

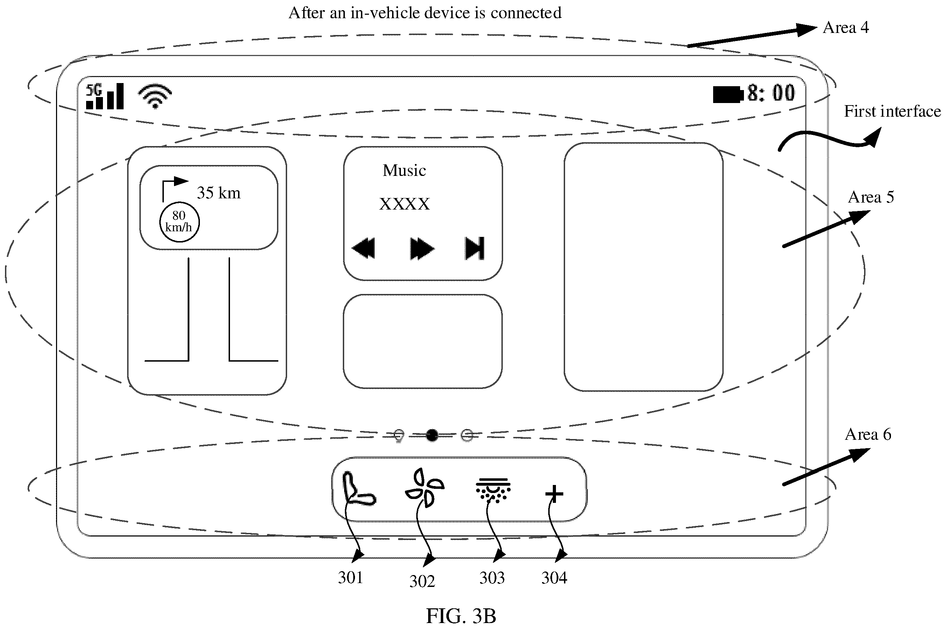

After the tablet computer is connected to the in-vehicle device, the tablet computer displays the first interface, as shown in FIG. 3B. The first interface includes an area 4, an area 5, and an area 6. The area 4 is an area in which the status bar is located on the top of the screen. The area 5 is located in the middle, and includes various widgets. The area 6 is an area in which a dock dock bar is located, and includes various icons. It should be noted that, for ease of understanding, this specification uses an example in which a style of the second interface is similar to that of the first interface (both include three areas, and layout manners of the three areas are similar). Actually, the style of the second interface may be different from that of the first interface. For example, there is no widget in the first interface, or the widget is replaced with other content.

In some embodiments, the first interface (an interface displayed after the in-vehicle device is connected) in FIG. 3B may be completely different from the second interface (an interface displayed before the in-vehicle device is connected) in FIG. 3A.

That the first interface is completely different from the second interface may include: The area 4 in the first interface is different from the area 1 in the second interface, the area 5 in the first interface is different from the area 2 in the second interface, and the area 6 in the first interface is different from the area 3 in the second interface.

That the area 4 in the first interface is different from the area 1 in the second interface may be a plurality of cases. Case 1: The area 1 includes the time information, the wireless signal information, the battery level information, the operator information, and the like of the tablet computer, and the area 4 includes time information, battery level information, operator information, and the like of the in-vehicle device. In other words, in the first interface displayed after the tablet computer is connected to the in-vehicle device, the status bar does not display the battery level information, the time information, and the like of the tablet computer, but displays the battery level information, the time information, and the like of the in-vehicle device. Case 2: The area 4 includes the time information, the battery level information, and the like of the tablet computer, and also includes the time information, the battery level information, and the like of the in-vehicle device. In other words, in the first interface displayed after the tablet computer is connected to the in-vehicle device, the time information, the battery level information, and the like of the in-vehicle device are added to the status bar. In this manner, the user may determine, based on the status bar, that the tablet computer is connected to the in-vehicle device, and may further master basic information (time, the battery level, and the like) of the in-vehicle device by using the tablet computer.

That the area 5 in the first interface is different from the area 2 in the second interface may include: At least one of a quantity, sizes, locations, displayed content, and the like of the widgets in the area 5 is different from those of the widgets in the area 2. For example, as shown in FIG. 3A, the widgets in the area 2 display information about different applications or functions on the tablet computer, and as shown in FIG. 3B, the widgets in the area 5 display information about different applications or functions in the in-vehicle device. For example, as shown in FIG. 3B, one widget displays navigation information (for example, a right-turn arrow, a driving distance, and a current vehicle speed) of the in-vehicle device. Another widget displays information about an in-vehicle audio (for example, music XXX, a pause button, a next song, and a previous song).

That the area 6 in the first interface is different from the area 3 in the second interface may include: At least one of a quantity, sizes, locations, corresponding functions or applications, and the like of the icons included in the area 6 is different from those of the icons included in the area 3. For example, as shown in FIG. 3A, the area 3 displays icons of different applications or functions on the tablet computer, and in FIG. 3B, the area 6 includes icons of applications or functions in the in-vehicle device, for example, an icon 301 used to adjust a seat, an icon 302 used by a user to adjust an in-vehicle air conditioner, an icon 303 used to adjust an in-vehicle light, and an icon 304 used to add a head unit function.

FIG. 3A and FIG. 3B are compared. When the tablet computer displays the second interface (as shown in FIG. 3A), if the tablet computer is connected to the in-vehicle device, the display of the tablet computer is switched from the second interface to the first interface (as shown in FIG. 3B). The first interface is completely different from the second interface. The first interface includes related information of the in-vehicle device, and is used to control a related function of the in-vehicle device.

In some other embodiments, the first interface (the interface displayed after the in-vehicle device is connected) in FIG. 3B and the second interface (the interface displayed before the in-vehicle device is connected) in FIG. 3A may be partially the same, that is, may overlap.

For example, the area 4 in the first interface is the same as the area 1 in the second interface, the area 5 is different from the area 2, and the area 6 is different from the area 3. The area 4 is the same as the area 1. For example, the area 1 displays the battery level information, the time information, and the like of the tablet computer, and the area 4 still displays the battery level information, the time information, and the like of the tablet computer. The area 5 is different from the area 2, and the area 6 is different from the area 3. For details, refer to the foregoing descriptions. Simply speaking, after the tablet computer is connected to the in-vehicle device, the areas for the status bars on the top of the screen in the first interface and the second interface do not change, and another area may change.

For another example, the area 4 is the same as the area 1, the area 5 and as the area 2 may be the same as or partially the same, and the area 6 and the area 3 may be partially the same. That the area 5 is the same as the area 2 includes that the quantity, styles, the locations, and displayed information of the widgets included in the area 5 and the area 2 are the same. For example, the area 5 and the area 2 each display information about an application or a function of the tablet computer. In other words, after the tablet computer is connected to the in-vehicle device, the widgets in the middle area in the first interface displayed remain unchanged. The area 5 is partially the same as the area 2. For example, the area 5 may include the widgets (some or all) in the area 2 and the widgets of the in-vehicle device. In other words, various widgets of the in-vehicle device are added to the widgets in the middle area of the first interface displayed after the tablet computer is connected to the in-vehicle device. That the area 6 is partially the same as the area 3 includes: The area 6 may include the icons (all or some) in the area 3 and the icons of the in-vehicle device.

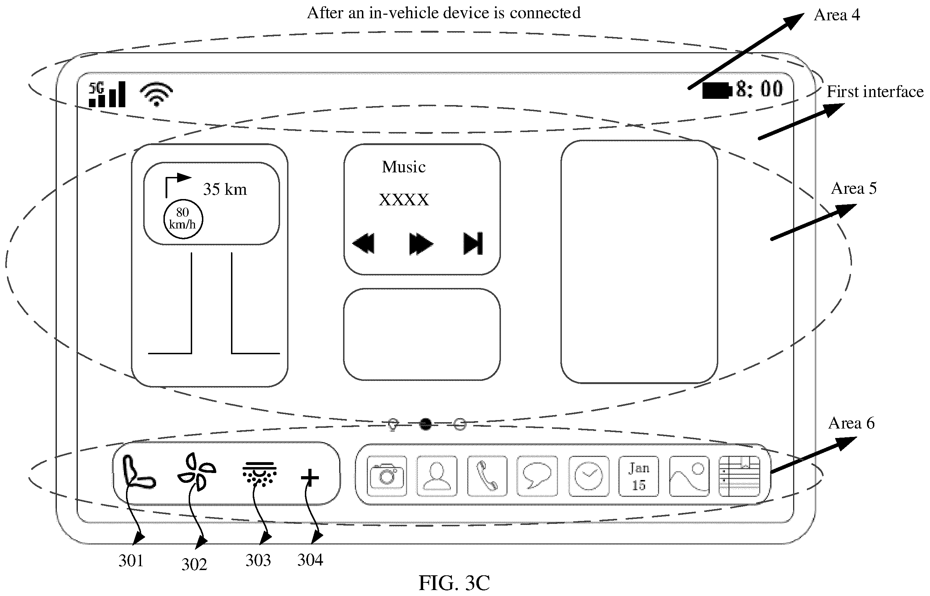

For example, after the tablet computer is connected to the in-vehicle device, the tablet computer is switched from the second interface (for example, the second interface in FIG. 3A) to the first interface shown in FIG. 3C, and the first interface is partially the same as the second interface. Specifically, the first interface includes the area 4 to the area 6. The area 4 is the same as the area 1, and the area 5 is different from the area 2. The area 6 and the area 3 partially overlap. For example, as shown in FIG. 3C, the area 6 includes not only some icons (that is, the icons of the tablet computer) in the area 3, but also the icons (such as icons 301 to 303) of the in-vehicle device. In other words, the dock bar in the first interface displayed after the tablet computer is connected to the in-vehicle device includes a combination of an application/function icon on the tablet computer and an application/function icon (for example, an icon 301 to an icon 304) in the in-vehicle device. In the dock bar in the first interface, the user may control the application/function of the tablet computer, and may also control the application/function in the in-vehicle device.

In conclusion, in the application scenario 1, after the tablet computer is connected to the in-vehicle device, the second interface originally displayed on the tablet computer is switched to the first interface. The first interface may be completely different from or partially the same as the second interface, and the user may control the in-vehicle device through the first interface.

**Application scenario 2: The first device is a tablet computer, and the second device is a speaker device.**

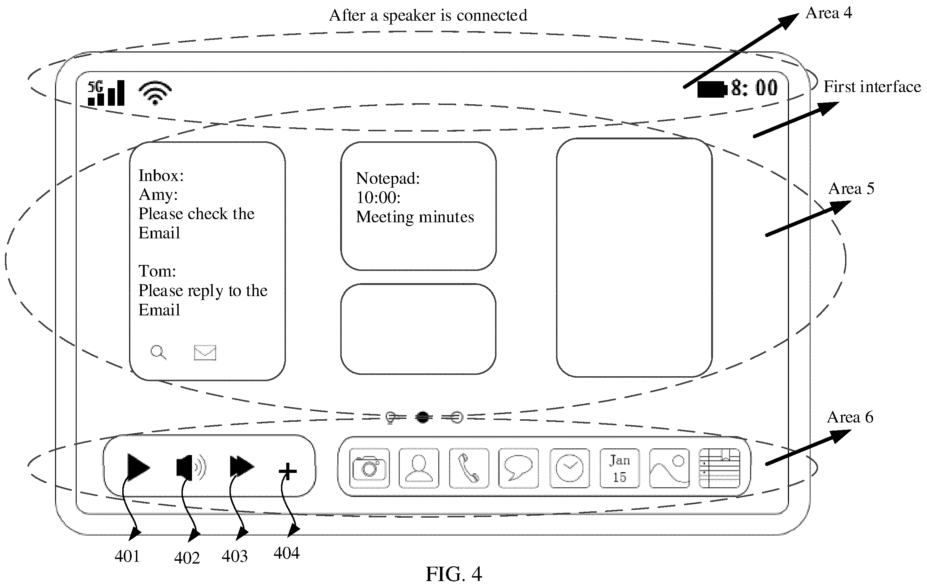

The tablet computer displays a second interface (for example, the second interface shown in FIG. 3A). When the tablet computer is connected to the speaker device, the tablet computer displays the first interface, where the first interface includes at least one desktop component, and the at least one desktop component is used to control the speaker device. The first interface and the second interface may be completely the same or different. A principle is similar to that in the application scenario 1, and details are not described. For example, the first interface displayed after the tablet computer is connected to the speaker may be the first interface shown in FIG. 4. As shown in FIG. 4, icons in a dock bar in the first interface and a dock bar in the second interface (the second interface shown in FIG. 3A) overlap. The dock bar in the first interface includes icons of various applications of the tablet computer, and further includes various icons used to control a speaker function, such as an icon 401, an icon 402, an icon 403, and an icon 404. The icon 401 is used to control the speaker to start or stop playing, the icon 402 is used to control volume of the speaker, the icon 403 is used to control a previous song or a next song of the speaker, and the icon 404 is used to add another function of the speaker, for example, a playing speed.

**Application scenario 3: The first device is a tablet computer, and the second device is an office device, for example, a printer.**

The tablet computer displays a second interface (for example, the second interface shown in FIG. 3A). When the tablet computer is connected to the printer, the tablet computer displays the first interface, where the first interface includes at least one desktop component, and the at least one desktop component is used to control a speaker device. The first interface and the second interface may be completely the same or different. A principle is similar to that in the application scenario 1, and details are not described.

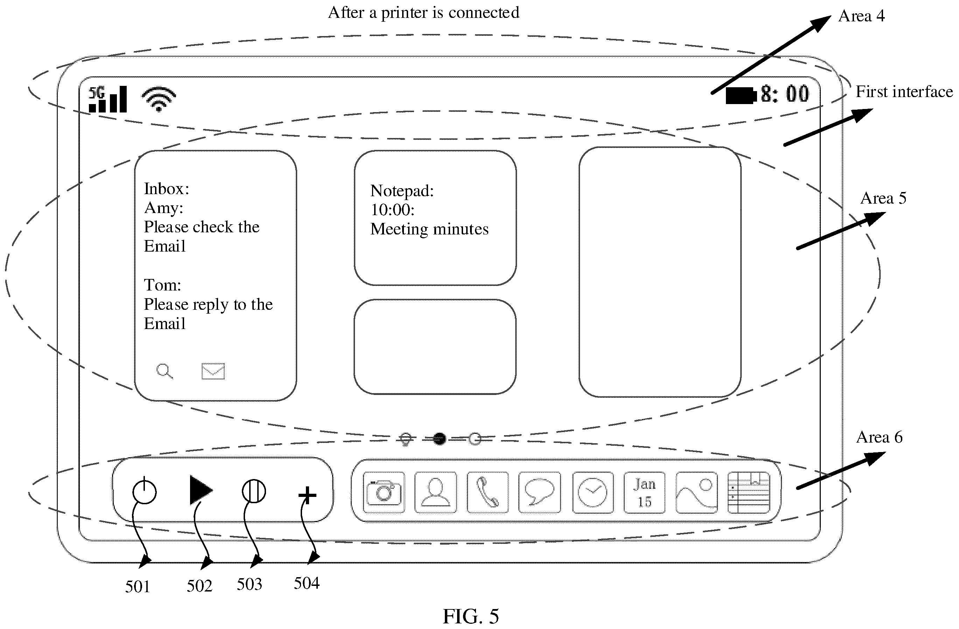

For example, the first interface displayed after the tablet computer is connected to the speaker may be the first interface shown in FIG. 5. As shown in FIG. 5, icons in a dock bar in the first interface and a dock bar in the second interface (the second interface shown in FIG. 3A) overlap. The dock bar in the first interface includes icons of various applications of the tablet computer, and further includes various icons used to control the printer, such as an icon 501, an icon 502, an icon 503, and an icon 504. The icon 501 is used to control starting or stopping of the printer, the icon 502 is used to control pausing or continuing of the printer, the icon 503 is used to control a printing color (for example, black and white printing or color printing) of the printer, and the icon 504 is used to add another function of the printer.

In the foregoing three application scenarios, an example in which the first device is a tablet computer and the second devices are different is used. It can be learned that when the first device is connected to different second devices, desktop components in the first interface are different. For example, styles of the desktop components are different, and corresponding functions are different.

It may be understood that, in addition to the tablet computer, the first device may be another device, for example, a mobile phone and a notebook computer.

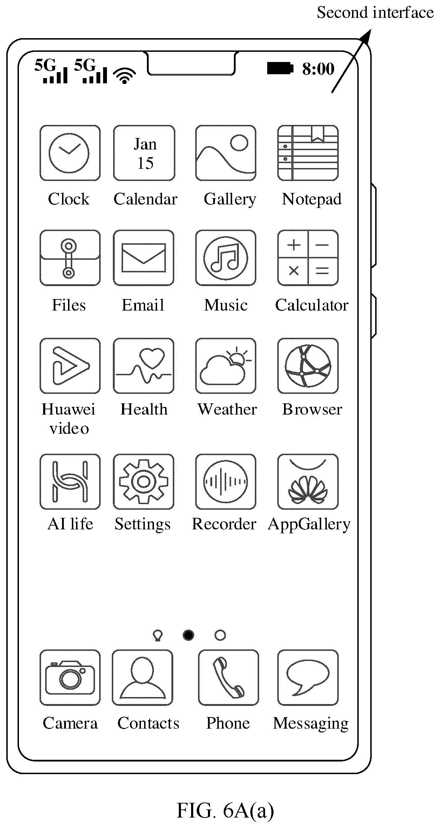

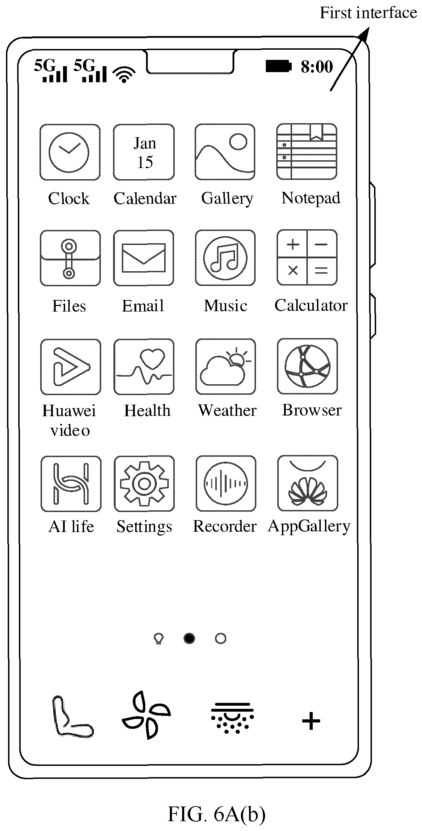

For example, the first device is the mobile phone. As shown in FIG. 6A(a), the mobile phone displays a second interface, and the second interface is a local interface of the mobile phone, for example, a home screen. After the mobile phone is connected to the second device (for example, the in-vehicle device), the mobile phone displays the first interface, for example, as shown in FIG. 6A(b). The first interface and the second interface may be completely different or partially different. For example, the first interface and the second interface may be partially different. FIG. 6A(a) and FIG. 6A(b) are compared. Icons in a dock bar (a lower area of the screen) in the first interface and a dock bar in the second interface are different. For example, the dock bar in the second interface includes icons of various applications/functions on the mobile phone, and the dock bar in the first interface includes icons of various applications/functions in the in-vehicle device.

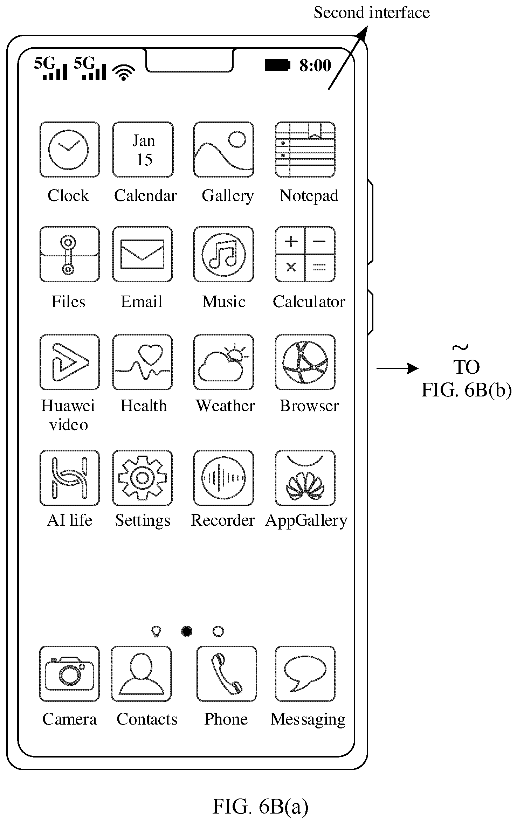

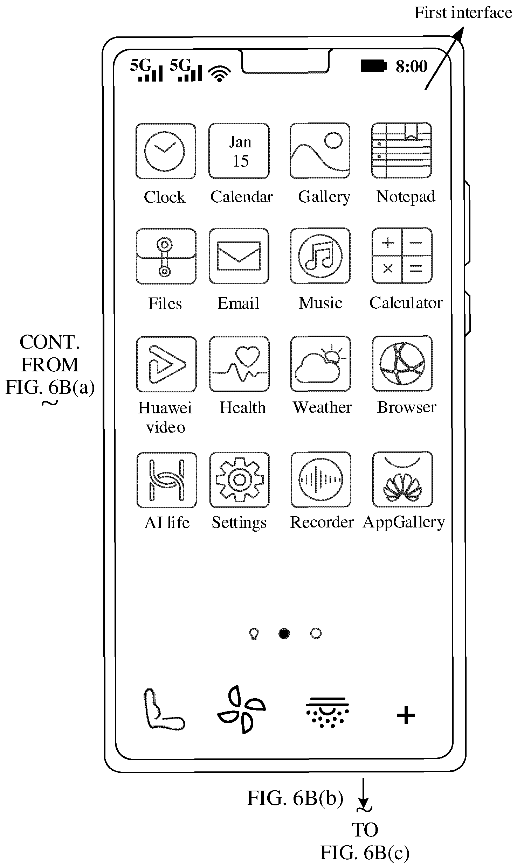

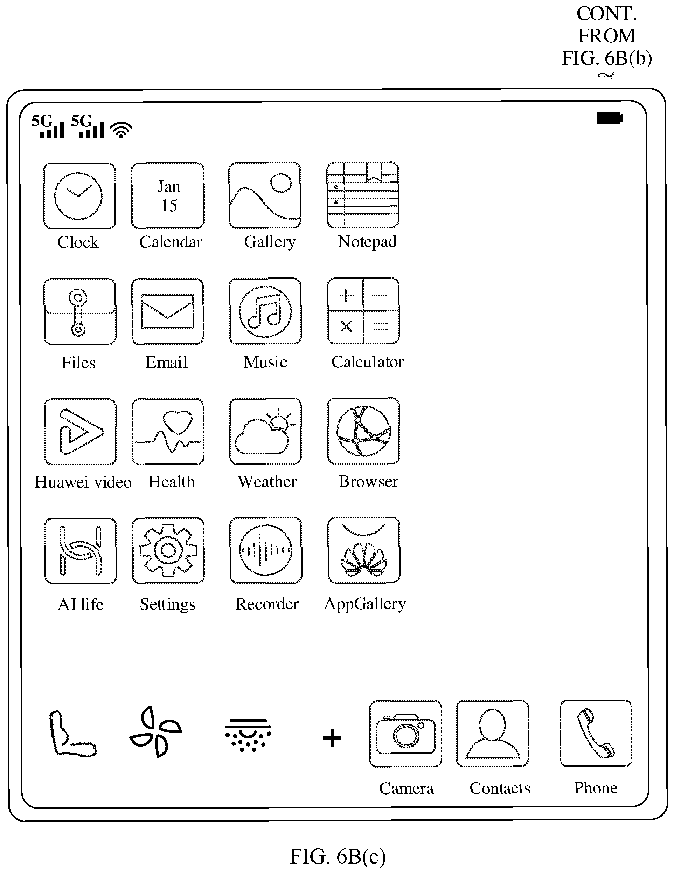

For example, the first device is a foldable mobile phone. As shown in FIG. 6B(a), the mobile phone is in a folded state and displays a second interface, where the second interface is a local interface of the mobile phone. After the mobile phone is connected to the second device (for example, an in-vehicle device), the mobile phone displays a first interface, for example, as shown in FIG. 6B(b). Icons in a dock bar (a lower area of the screen) in the first interface and a dock bar (a lower area of the screen) in the second interface are different. For example, the dock bar in the second interface includes icons of various applications/functions on the mobile phone, and the dock bar in the first interface includes icons of various applications/functions in the in-vehicle device. In this case, if the mobile phone is switched from the folded state to an unfolded state, an interface shown in FIG. 6B(c) is displayed. The dock bar in the interface includes icons of various applications/functions on the mobile phone and icons of various applications/functions in the in-vehicle device.

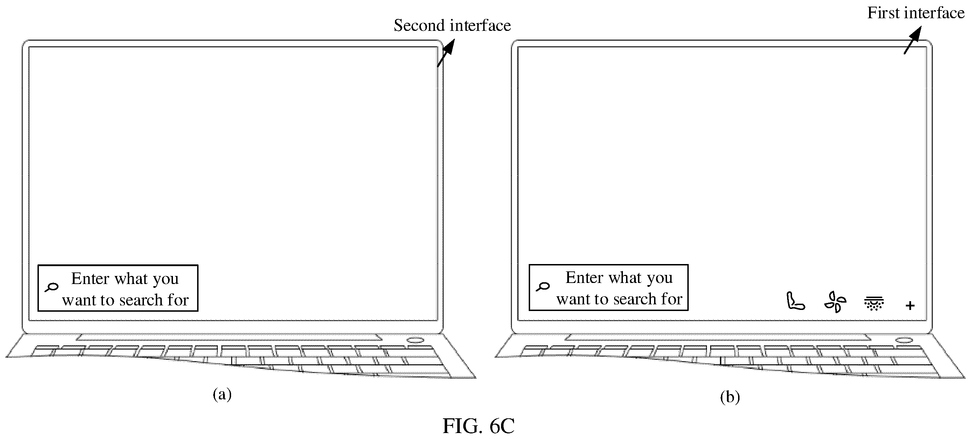

For example, the first device is a notebook computer. As shown in (a) in FIG. 6C, the notebook computer displays a second interface, and the second interface is a local interface of the notebook computer. The dock bar in the second interface includes a text box used to enter content that the user wants to search for, and certainly, may further include icons (not shown in the figure) of various applications/functions in the notebook computer. After the notebook computer is connected to the second device (for example, the in-vehicle device), the first interface is displayed, as shown in (b) in FIG. 6C. The display information in the dock bar in the first interface overlaps that in the dock bar in the second interface. For example, the dock bar in the first interface includes both a text box on the notebook computer and icons of various applications/functions in the in-vehicle device.

The following describes in detail implementation principles of the technical solutions provided in embodiments of this application with reference to the accompanying drawings. For ease of understanding, the following mainly uses the foregoing application scenario 1 (the tablet computer is connected to the in-vehicle device) as an example for description. However, for another application scenario, this technical solution is also applicable.

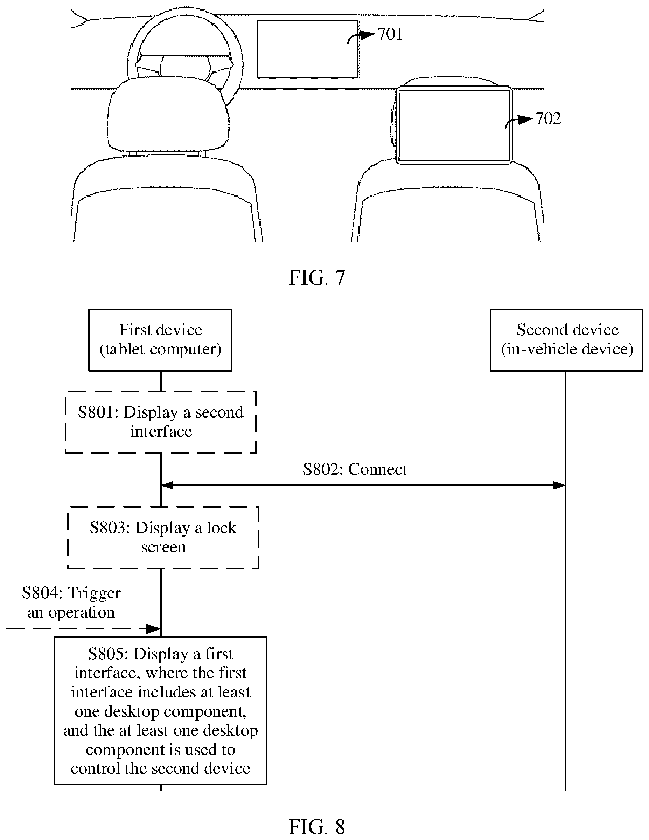

With development of an automobile technology, the in-vehicle multi-screen has become one of the characteristics of the automobile. The in-vehicle multi-screen means that in addition to a central display screen of an automobile, another screen is also disposed in the automobile. For example, a screen may be disposed in front of a seat, for example, a front passenger seat or a rear seat. For example, with reference to FIG. 7, a central display screen 701 is included in the vehicle, and a screen 702 is disposed in front of the rear seat. In this way, during a trip, a rear-seat passenger may enjoy an independent entertainment function through the screen 702. However, the automobile with a multi-screen configuration has many disadvantages. For example, the price is expensive, and many users do not purchase the automobile. As a result, the user cannot enjoy entertainment experience brought by the in-vehicle multi-screen. For another example, the in-vehicle multi-screen (for example, the screen 702) is equipped with a few applications, and content is poor. As a result, a passenger cannot obtain convenient and pleasant experience in a use process.

In this embodiment of this application, a mobile device such as a tablet computer or a mobile phone may be used as an in-vehicle screen. For example, the rear-seat passenger may take a personal mobile device (for example, the tablet computer) onto the vehicle, and connect the personal mobile device to the in-vehicle device. In this way, the tablet computer may be used as a part of a head unit for the rear-seat passenger. Original personal data and use habits of the user on the tablet computer are retained, and the in-vehicle device may be controlled by using the tablet computer. A problem that a multi-screen vehicle is expensive and the user has a low purchase desire can be resolved. In addition, the tablet computer has a large quantity of applications and rich content, and passengers can obtain pleasant experience in a use process.

For example, FIG. 8 is a schematic flowchart of a device control method according to an embodiment of this application. The flowchart is applicable to the scenario shown in FIG. 7. As shown in FIG. 8, the procedure includes the following steps.

S801: A first device (namely, a tablet computer) displays a second interface.

The second interface is a local interface of the first device, for example, the second interface shown in FIG. 3A. Optionally, S801 may be performed, or may not be performed, and therefore S801 is represented by using a dashed line in the figure. For example, S801 is not performed. For example, the first device may be in a black screen state, and then S802 is performed.

S802: The first device is connected to a second device (namely, an in-vehicle device).

For example, the first device and the second device may be connected in a wireless (Wi-Fi, Bluetooth, or the like) or wired manner. For example, the first device is wirelessly connected to the second device. To improve security, the first device and the second device may perform identity authentication by using a pairing code, and then perform connection.

For example, the first device receives an operation, and displays a device list of surrounding devices. The device list of surrounding devices includes an identifier of the second device. When receiving an operation of tapping the identifier of the second device by a user, the first device performs pairing with the second device by using the pairing code, and if pairing succeeds, connection is established. There are two specific processing manners. Manner 1: The first device sends a connection request to the second device. After receiving the connection request, the second device sends a pairing code of the second device to the first device. The first device displays the pairing code, and connects, when the user confirms the connection, to the second device. Manner 2: The first device sends a pairing code of the first device to the second device, and the second device displays the pairing code after receiving the pairing code, and connects, when the user confirms the connection, to the first device.

Alternatively, the second device receives an operation, and displays a device list of surrounding devices. The device list of surrounding devices includes an identifier of the first device. When receiving an operation of tapping the identifier of the first device by the user, the second device performs pairing with the first device by using the pairing code, and if pairing succeeds, connection is established. There are two specific processing manners. Manner 1: The second device sends a connection request to the first device. After receiving the connection request, the first device sends a pairing code of the first device to the second device. The second device displays the pairing code, and connects, when the user confirms the connection, to the first device. Manner 2: The second device sends a pairing code of the second device to the first device, and the first device displays the pairing code after receiving the pairing code, and connects, when the user confirms the connection, to the second device.

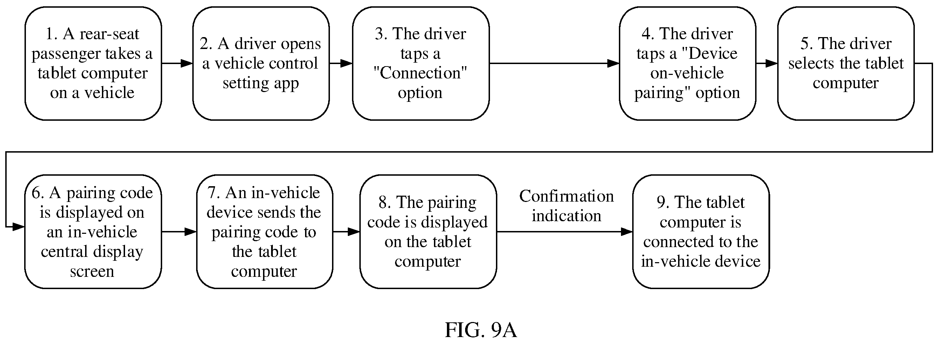

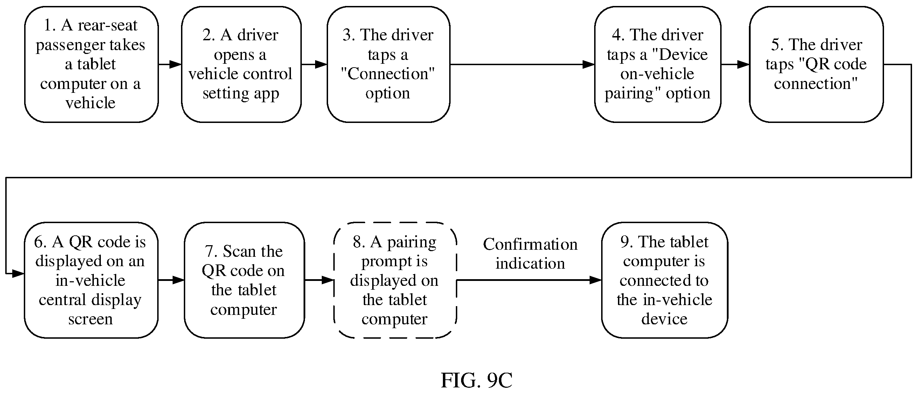

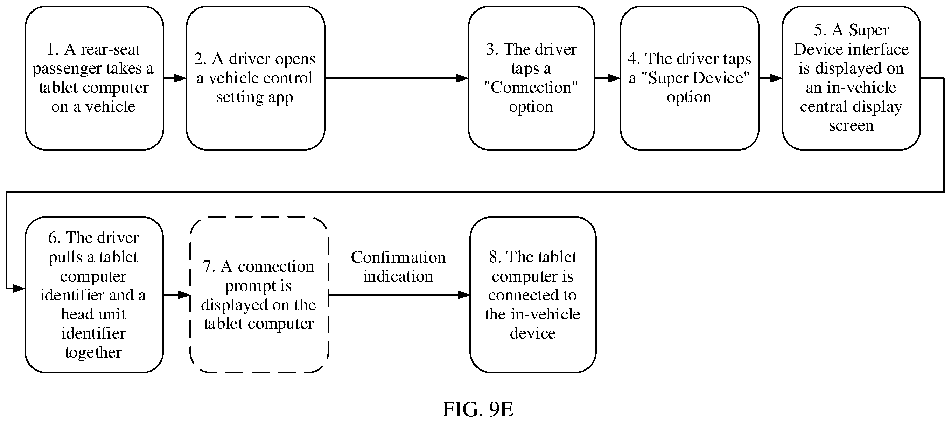

In an actual operation, there are a plurality of operation procedures in which the first device is connected to the second device. The following uses FIG. 9A to FIG. 9F(d) as an example to describe a procedure of connecting the first device to the second device. FIG. 9A to FIG. 9B(d) show a first connection manner, FIG. 9C to FIG. 9D(d) show a second connection manner, and FIG. 9E to FIG. 9F(d) show a third connection manner.

### First connection process

For example, as shown in FIG. 9A, the first connection process includes the following procedure.

Step 1: The user (for example, a rear-seat passenger) takes the tablet computer (namely, the first device) on a vehicle.

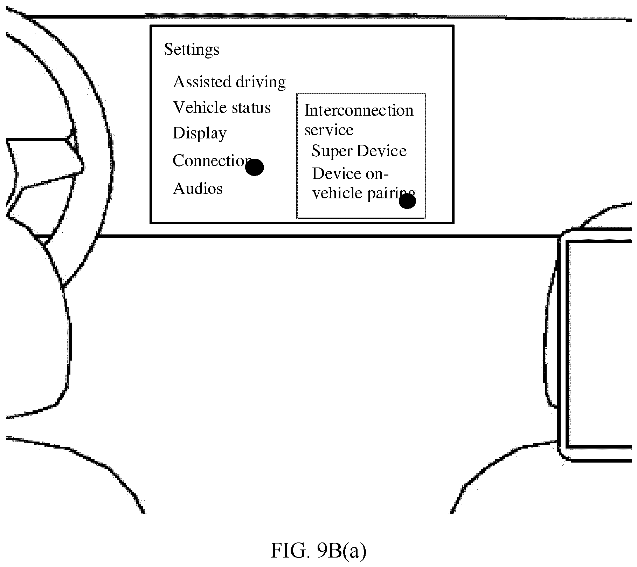

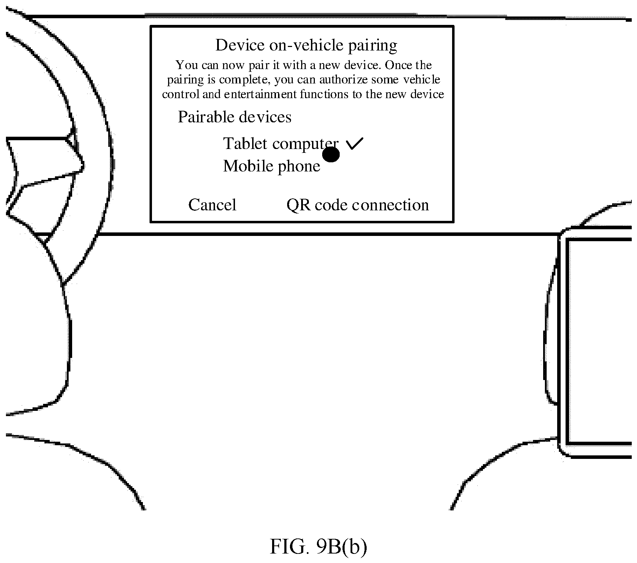

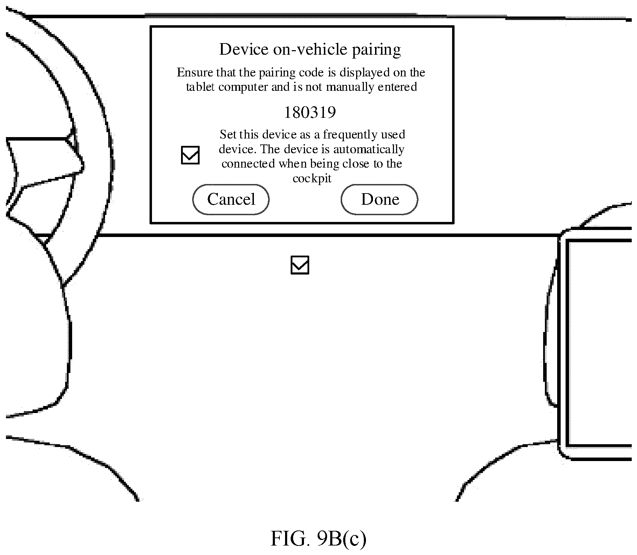

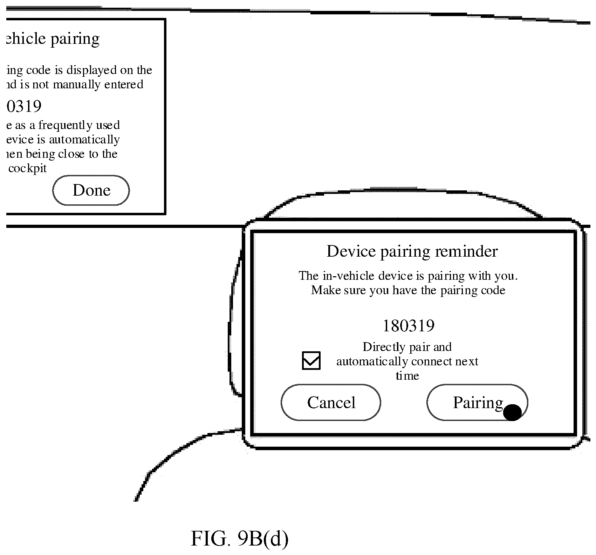

Step 2: A driver opens a vehicle control setting app in the in-vehicle device (namely, the second device). For example, a process of opening the vehicle control setting app is not described in detail in this application. For an interface displayed after the vehicle control setting app is displayed, refer to FIG. 9B(a). The interface includes a plurality of options such as "Assisted driving", "Vehicle status", "Display", "Connection", and "Voice".

Step 3: The driver taps the "Connection" option. For example, as shown in FIG. 9B(a), the driver taps the "Connection" option in the interface for the vehicle control setting app. When the in-vehicle device detects that the "Connection" option is selected, an interconnection service widget is displayed. The widget includes two options: Super Device and Device on-vehicle pairing.

Step 4: The driver taps the "Device on-vehicle pairing" option. When the in-vehicle device detects that the driver selects the "Device on-vehicle pairing" option, an interface in FIG. 9B(b) is displayed on an in-vehicle central display screen. A device list of devices that can be paired is displayed in the interface. For example, the list includes an identifier of a tablet computer and an identifier of a mobile phone. Optionally, prompt information may be further displayed in the interface in FIG. 9B(b), for example, prompt information "You can now pair with the new device, and after the pairing is completed, some vehicle control functions and entertainment functions may be authorized to a new device".

Step 5: the driver selects "Tablet computer". For example, in the interface in FIG. 9B(b), the driver selects the identifier of the tablet computer in the pairing list.

Step 6: The pairing code is displayed on the in-vehicle central display screen. For example, as shown in FIG. 9B(c), the in-vehicle central display screen displays the pairing code. Optionally, some prompt information may be further displayed, for example, "the device is set as a frequently used device, and is automatically connected when the device is close to a cockpit". A selection box is displayed before the prompt information. If the user taps the selection box, an identifier indicating being selected (for example, a tick) displayed in the selection box.

Step 7: The in-vehicle device sends the pairing code to the tablet computer.

Step 8: The pairing code is displayed on the tablet computer. For example, as shown in FIG. 9B(d), the tablet computer displays the pairing code. Optionally, a "Pairing" button and a "Cancel" button may be further displayed. Optionally, prompt information may be further displayed, for example, "automatic connection for next direct pairing". A selection box is displayed before the prompt information. If the user taps the selection box, an identifier indicating being selected (for example, a tick) displayed in the selection box.

Step 9: When receiving a connection confirmation indication, the tablet computer is connected to the in-vehicle device. For example, with reference to FIG. 9B(d), when receiving a tap operation on the "Pairing" button, the tablet computer is connected to the in-vehicle device.

It should be noted that, in FIG. 9A to FIG. 9B(d), the driver performs an operation on the second device (namely, the in-vehicle device), and sends the pairing code of the second device to the first device for display. In some other embodiments, the rear-seat passenger may also perform an operation on the first device (namely, the tablet computer), and send the pairing code of the first device to the second device for display. Principles of the two implementations are the same, and details are not described.

### Second connection manner

For example, as shown in FIG. 9C, the second connection process includes the following procedure.

Step 1: The user (for example, a rear-seat passenger) takes the tablet computer (namely, the first device) on a vehicle.

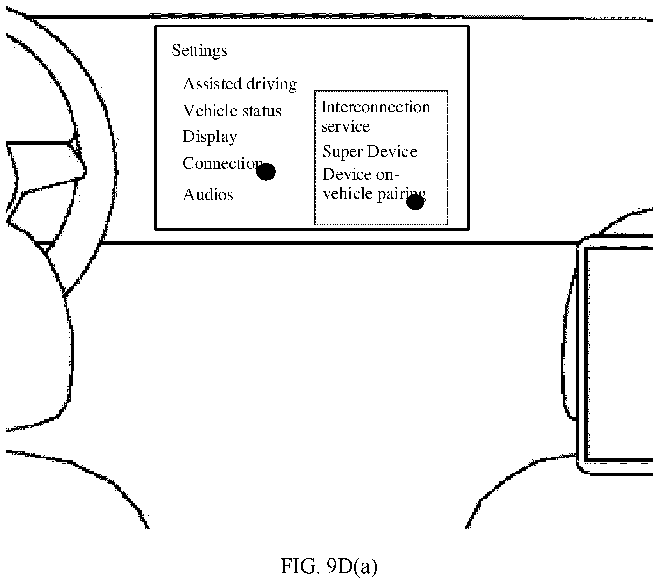

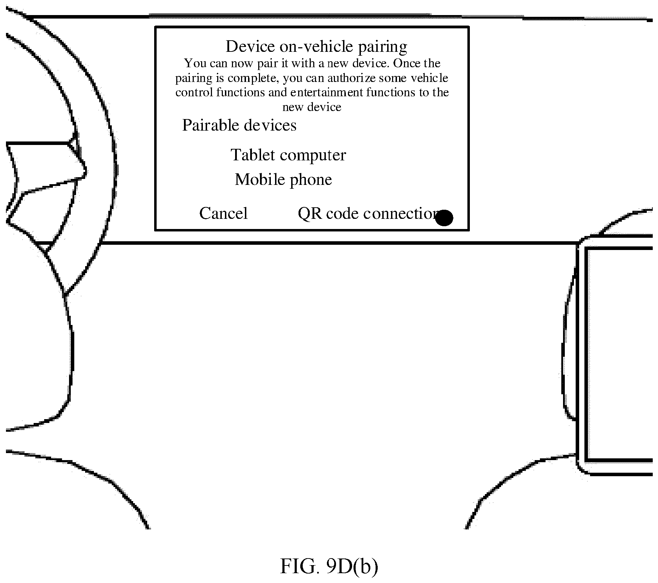

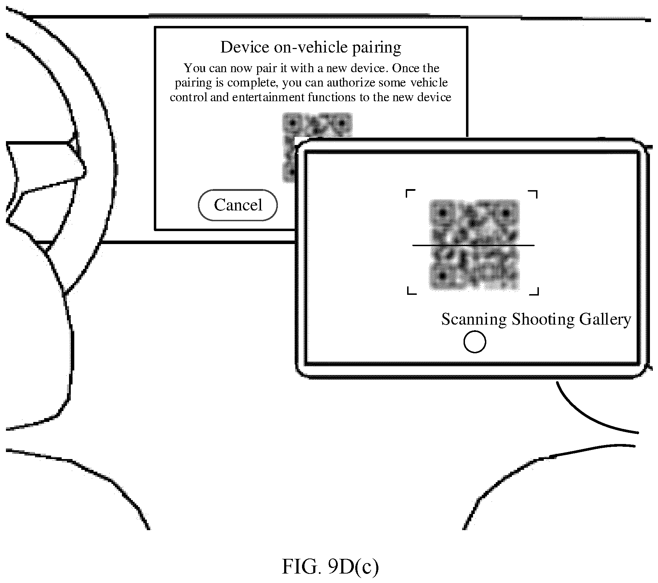

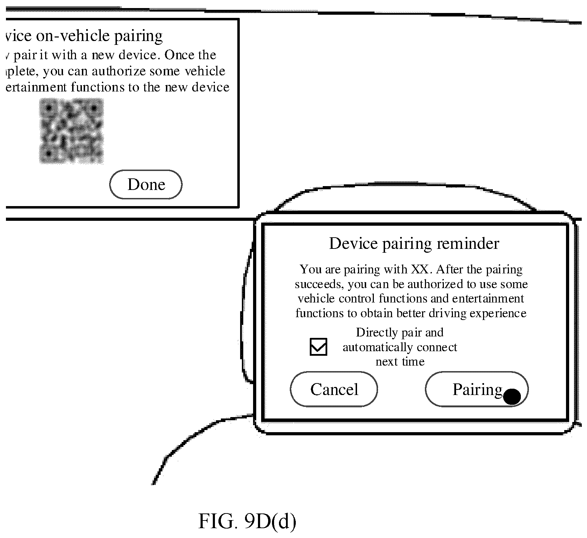

Step 2: The driver opens a vehicle control setting app in the in-vehicle device (namely, the second device). An interface for the vehicle control setting app is shown in FIG. 9D(a).

Step 3: The driver taps the "Connection" option. For example, as shown in FIG. 9D(a), the driver taps the "Connection" option in the interface for the vehicle control setting app. When the in-vehicle device detects that the "Connection" option is selected, an interconnection service widget is displayed. The widget includes two options: Super Device and Device on-vehicle pairing.

Step 4: The driver taps the "Device on-vehicle pairing" option. When the in-vehicle device detects that "Device on-vehicle pairing" option is selected, an interface shown in FIG. 9D(b) is displayed on an in-vehicle central display screen. A device list of devices that can be paired is displayed in the interface, and the list includes an identifier of a tablet computer and an identifier of a mobile phone. Optionally, the interface further displays a "QR code connection" button.

Step 5: The driver taps the "QR code connection" button. For example, as shown in FIG. 9D(b), the driver taps the "QR code connection" button.

Step 6: A QR code is displayed on the in-vehicle central display screen. For example, as shown in FIG. 9D(c), the in-vehicle central display screen displays the QR code.

Step 7: The rear-seat passenger uses the tablet computer to scan the QR code. For example, as shown in FIG. 9D(c), the rear-seat passenger uses the tablet computer to scan the QR code displayed on the in-vehicle central display screen.

Step 8: The tablet computer displays prompt information about pairing with the head unit. For example, as shown in FIG. 9D(d), a device pairing reminder is displayed on the tablet computer. Optionally, a "Cancel" button and a "Pairing" button may be further displayed. Optionally, prompt information may be further displayed, for example, "You are pairing with XX. After the pairing succeeds, you can be authorized to use some vehicle control functions and entertainment functions to obtain better driving experience."

Step 9: When receiving a pairing confirmation indication, the tablet computer is connected to the head unit. For example, as shown in FIG. 9D(d), when receiving an operation on the "Pairing" button, the tablet computer is connected to the head unit.

It may be understood that the foregoing step 8 may be performed or not performed. Therefore, step 8 in FIG. 9C is identified by using a dashed line. If step 8 is not performed, that is, the rear-seat passenger is automatically connected to the in-vehicle device after scanning the QR code by using the tablet computer, and the user does not need to perform confirmation on the tablet computer.

### Third connection process

For example, as shown in FIG. 9E, a process of connecting the first device to the second device includes the following steps.

Step 1: The user (for example, a rear-seat passenger) takes the tablet computer (namely, the first device) on a vehicle.

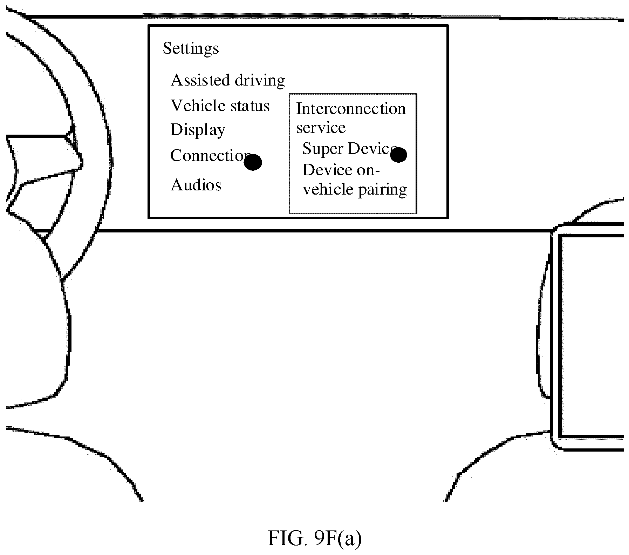

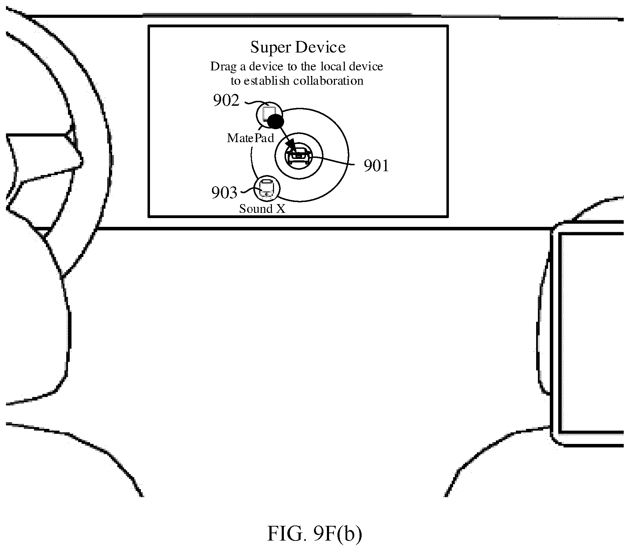

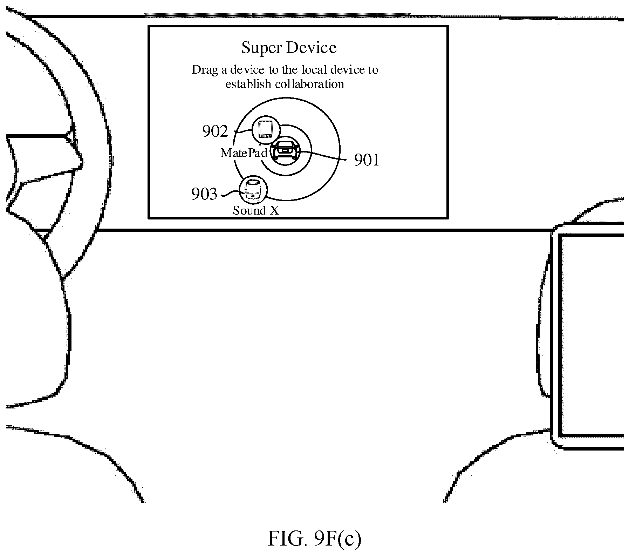

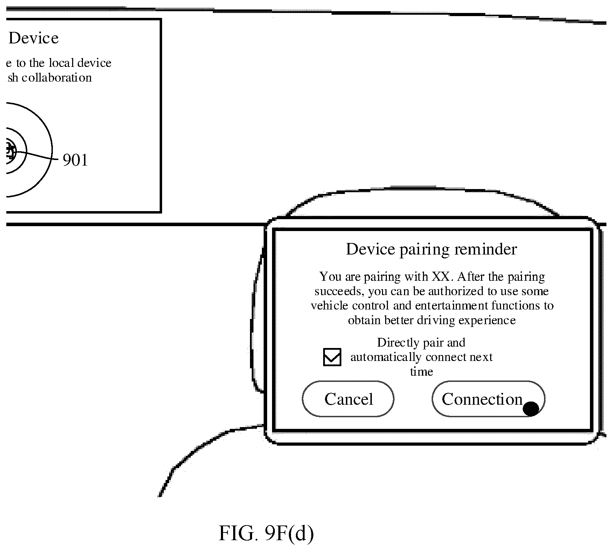

Step 2: The driver opens a vehicle control setting app in the in-vehicle device (namely, the second device). An interface for the vehicle control setting app is shown in FIG. 9F(a).

Step 3: The driver taps the "Connection" option. For example, as shown in FIG. 9F(a), the driver taps the "Connection" option in the interface for the vehicle control setting app. When the in-vehicle device detects that the "Connection" option is selected, an interconnection service widget is displayed. The widget includes two options: Super Device and Device on-vehicle pairing. It should be noted that the name "Super Device" is merely an example, and may be replaced with another name, for example, a name such as "multi-device interconnection" or "multi-device collaboration". This is not limited in embodiments of this application.

Step 4: The driver taps the "Super Device" option. For example, as shown in FIG. 9F(a), the driver taps the "Super Device" option.

Step 5: A Super Device interface is displayed on the in-vehicle central display screen. For example, as shown in FIG. 9F(b), the in-vehicle central display screen displays the Super Device interface, where a head unit identifier 901 is displayed in the interface, and a tablet computer identifier 902, a speaker identifier 903, and the like are displayed around the head unit identifier 901, to represent that a tablet computer, a speaker, and the like exist around the head unit.

Step 6: The driver pulls the identifier of the tablet computer and the head unit identifier together. For example, in FIG. 9F(b), the driver may pull the tablet computer identifier 902 to the head unit identifier 901, that is, drag the tablet computer identifier 902 to the head unit identifier 901, as shown in FIG. 9F(c). The tablet computer identifier 902 is displayed in close proximity to (or close to) the head unit identifier 901.

Step 7: The tablet computer displays prompt information about pairing with the head unit. For example, as shown in FIG. 9F(d), a device pairing reminder is displayed on the tablet computer. Optionally, a "Cancel" button and a "Connect" button may be further displayed. Optionally, prompt information may be further displayed, for example, "You are pairing with XX. After the pairing succeeds, you can be authorized to use some vehicle control functions and entertainment functions to obtain better driving experience."

Step 8: When receiving a connection confirmation indication, the tablet computer is connected to the head unit. For example, as shown in FIG. 9F(d), when detecting an operation on a "Connect" button, the tablet computer is connected to the head unit.

It may be understood that step 7 may be performed or not performed. Therefore, step 7 in FIG. 9E is represented by using a dashed line. If step 7 is not performed, that is, after the driver pulls the tablet computer identifier 902 and the head unit identifier 901 together, the tablet computer is automatically connected to the in-vehicle infotainment, and the rear-seat passenger does not need to confirm the connection on the tablet computer.

It should be noted that, in FIG. 9E to FIG. 9F(d), the driver performs an operation on the second device (namely, the in-vehicle device), so that the Super Device interface is displayed on the second device. In the Super Device interface, the driver pulls the tablet computer identifier and the head unit identifier together to establish a connection. In some other embodiments, the rear-seat passenger may also perform an operation on the first device (namely, the tablet computer), so that the first device opens the Super Device interface, and the rear-seat passenger may pull the head unit identifier and the tablet computer identifier in the Super Device interface together to establish a connection. Principles of the two implementations are the same, and details are not described.

In addition to the foregoing three connection manners, there may be another connection manner. For example, the rear-seat passenger manually enters a network hotspot of the in-vehicle device on a tablet computer to connect to the in-vehicle device. In conclusion, there are a plurality of connection manners between the first device and the second device, and examples are not provided in this application.

S803: The first device displays a lock screen.

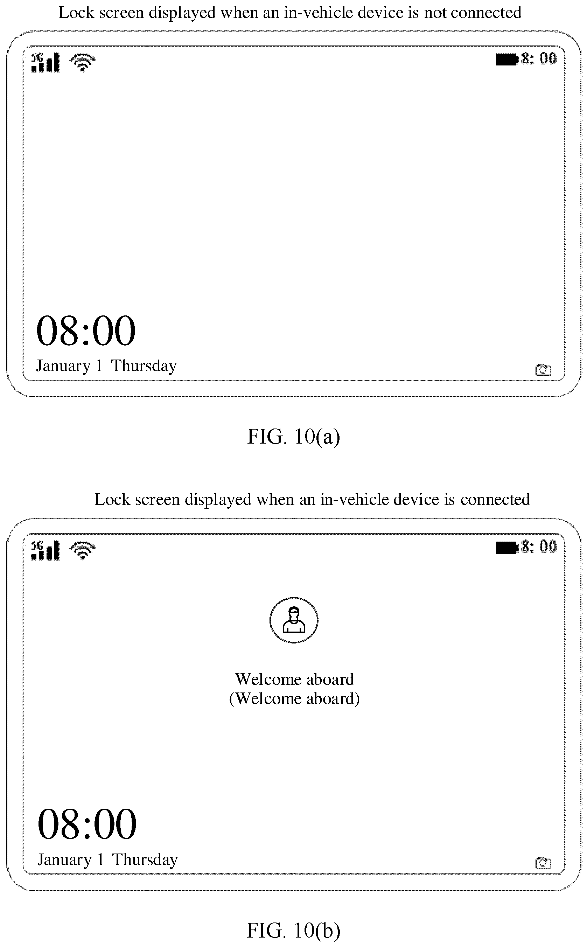

In some embodiments, after the first device is successfully connected to the second device, the first device enters the lock screen, where the lock screen is different from a lock screen displayed when the tablet computer is not connected to the vehicle. For ease of comparison, with reference to FIG. 10(a) and FIG. 10(b), FIG. 10(a) is a lock screen displayed when the tablet computer is not connected to the in-vehicle device, and FIG. 10(b) is a lock screen displayed when the tablet computer is connected to the in-vehicle device. The lock screen displayed when the tablet computer is not connected to the in-vehicle device includes basic information such as the time and battery level. The lock screen displayed when the tablet computer is connected to the in-vehicle device includes prompt information. For example, the prompt information is "welcome aboard (welcome on the vehicle)". In this way, the user may learn, through the lock screen, that the tablet computer is connected to the in-vehicle device.

S804: The first device receives a trigger operation.

For example, when the first device displays the lock screen shown in FIG. 10(b), if the first device receives a trigger operation (for example, a tap operation at any location) of the user in the lock screen, the first device may display the first interface, that is, S805.

Optionally, S803 and S804 may be performed or not performed, and therefore S803 and S804 each are represented by using a dashed line in FIG. 8. If S803 and S804 are not performed, that is, after the first device is successfully connected to the second device, the first interface is automatically displayed. If S803 and S804 are performed, after the first device is successfully connected to the second device, the lock screen (the lock screen shown in FIG. 10(b)) is first displayed. If the tap operation in the lock screen is received, the first interface is displayed.

As described above, S801 may be performed or not performed. Therefore, there are a plurality of cases when S801 is combined with S803 and S804. For example, in case 1, S801 is performed, and S803 and S804 are also performed. To be specific, when the tablet computer displays the second interface (S801), the tablet computer is connected to the in-vehicle device (S802), and when the connection succeeds, the tablet computer displays the lock screen (S803), that is, the tablet computer switches from the second interface to the lock screen. Case 2: S801 is performed, but S803 and S804 are not performed. To be specific, when the tablet computer displays the second interface (S801), the tablet computer is connected to the in-vehicle device (S802), and when the connection succeeds, the tablet computer directly displays the first interface (S805), that is, the tablet computer directly switches from the second interface to the first interface. Case 3: S801 is not performed, and S803 and S804 are performed. For example, when a black screen occurs on the tablet computer, the tablet computer is connected to the in-vehicle device (S802), and when the connection succeeds, the lock screen is displayed (S803), that is, the tablet computer enters the lock screen in FIG. 10(b) from the black screen. Case 4: S801 is not performed, and S803 and S804 are not performed. For example, when a black screen occurs on the tablet computer, the tablet computer is connected to the in-vehicle device (S802), and when the connection succeeds, the first interface is directly displayed (S805), that is, the tablet computer enters the first interface from the black screen.

S805: The first device displays a first interface, where the first interface includes at least one desktop component, and the at least one desktop component is used to control the second device.

For the desktop component, refer to the foregoing descriptions. The desktop component may include various icons, widgets, and the like. In some embodiments, the at least one desktop component used to control the second device may be displayed in any area in the first interface, for example, an area in which a dock bar is located. For the dock bar, refer to the foregoing descriptions.

It may be understood that before S805, the first device may further determine the at least one desktop component based on a type of the second device. For example, if the second device is a head unit, the at least one desktop component is a desktop component used to control the head unit, for example, an icon 301 to an icon 304 in FIG. 3C. For another example, the second device is a speaker, and the at least one desktop component is a desktop component used to control the speaker, for example, an icon 401 to an icon 404 in FIG. 4. For another example, the second device is a printer, and the at least one desktop component is a desktop component used to control the printer, for example, an icon 501 to an icon 504 in FIG. 5.

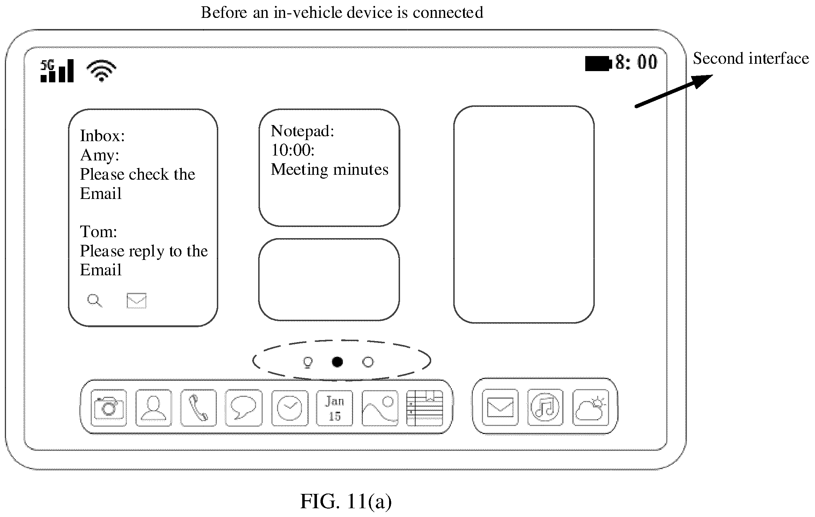

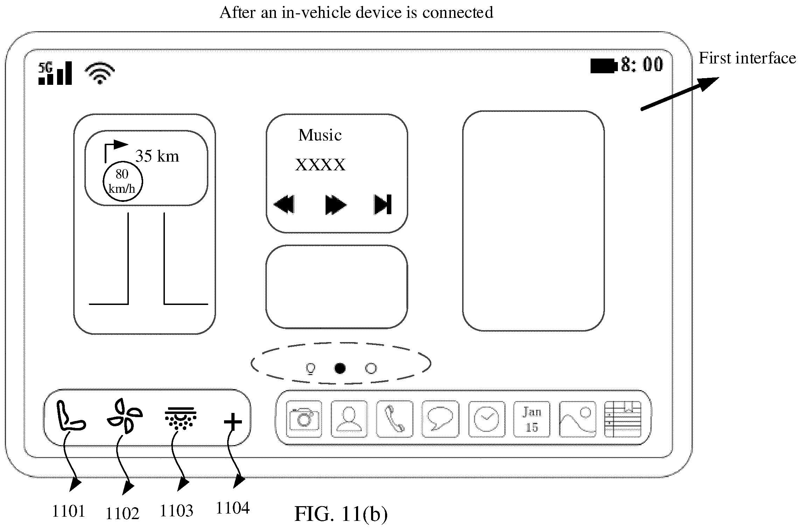

In some embodiments, the first interface is obtained by adjusting the second interface. Manner A: The first device adds, in a blank area in the second interface, the at least one desktop component used to control the second device, to obtain the first interface. The blank area may be any blank area in the second interface. Certainly, it is considered that there is a small blank area in the second interface or the interface is disordered when the at least one desktop component is displayed in the blank area, and the manner B may be further used, that is, the first device may cancel displaying of some information in the second interface, and display the at least one desktop component at a location of cancelling displaying information, to obtain the first interface. For example, with reference to FIG. 11(a), the second interface includes a dock bar, and the dock bar includes icons corresponding to various applications in the first device. The first device may cancel displaying of some icons in the dock bar, release a display area, and display, in the released display area, a desktop component used to control the in-vehicle device. For example, as shown in FIG. 11(b), an icon 1101, an icon 1102, an icon 1103, and an icon 1104 are displayed in the dock bar in the first interface. The icon 1101 is used to control an in-vehicle seat, the icon 1102 is used to control an in-vehicle air conditioner, the icon 1103 is used to control an in-vehicle light, and the icon 1104 is used to add another in-vehicle function.

In the example shown in FIG. 11(a) and FIG. 11(b), the first device cancels displaying of some icons in the dock bar, to release a display area to display a desktop component used to control the second device. It is assumed that the dock bar originally includes M icons (corresponding to M applications), and displaying of N icons (corresponding to N applications) is canceled. In some examples, the N icons may be any N of the M icons. In some other examples, that displaying of the N icons is canceled meets at least one of the following conditions.
(1) The N applications corresponding to the N icons are applications whose use frequencies are lower than a first preset frequency in the M applications. In other words, originally, there are M icons that are in the dock bar in the first interface and that correspond to the M applications. To release the display area, the first device determines N applications whose use frequencies are low in the M applications, and cancels displaying of the N icons corresponding to the N applications. In this way, icons of applications whose use frequencies are high may be reserved in the first interface, so that the user can quickly find these applications.
(2) The N applications corresponding to the N icons are not applications recently used by the user. In other words, originally, there are M icons that are in the dock bar in the first interface and that correspond to M applications. To release the display area, the first device determines the applications that are recently used and that are in the M applications, retains icons corresponding to the applications that are recently used, and cancels displaying of other icons (that is, remaining M-N icons). In this way, icons of the applications that are recently used by the user may be reserved in the first interface, so that the user can quickly find these applications.
(3) The N applications corresponding to the N icons are not system default applications or user-specified applications. In other words, originally, there are M icons that are in the dock bar in the first interface and that correspond to M applications. To release the display area, the first device determines the system default applications or the user-specified applications in the M applications, retains icons corresponding to the system default applications or the user-specified applications, and cancels displaying of other icons (that is, remaining M-N icons). In this way, the icons of the system default applications or the user-specified applications may be reserved in the first interface, so that the user can quickly find the system default applications or the user-specified applications.

In the foregoing embodiment, the first interface is an interface obtained by adjusting the second interface (for example, the foregoing manner A or manner B). It may be understood that when the first device displays the first interface, the second interface no longer exists. For example, the first device has a plurality of layers of main interfaces, and when the first device is not connected to the second device, the displayed second interface is an i^{th}-layer main interface. After the first device is connected to the second device, the displayed first interface is also the i^{th}-layer main interface. In other words, the i^{th}-layer main interface is adjusted from the second interface to the first interface. FIG. 11(a) and FIG. 11(b) are still used as an example. In FIG. 11(a), the first device has three layers of main interfaces (because there are three points in the dashed line area), the second interface is a second-layer main interface (because the second point in the three points is selected), and main interfaces of the other two layers are not shown in a diagram in this application. After the first device is connected to the second device, a first interface in FIG. 11(b) is displayed. The first interface is adjusted based on the second interface, and the first interface is still the second-layer main interface. Therefore, simply, in this manner, when the first device is connected to the second device, a current interface (namely, the second interface) of the first device is adjusted, and an adjusted interface (namely, the first interface) is displayed.

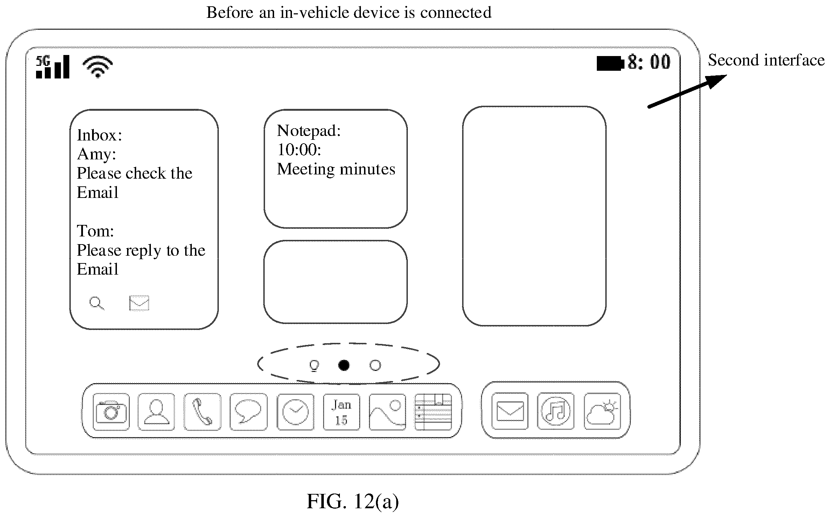

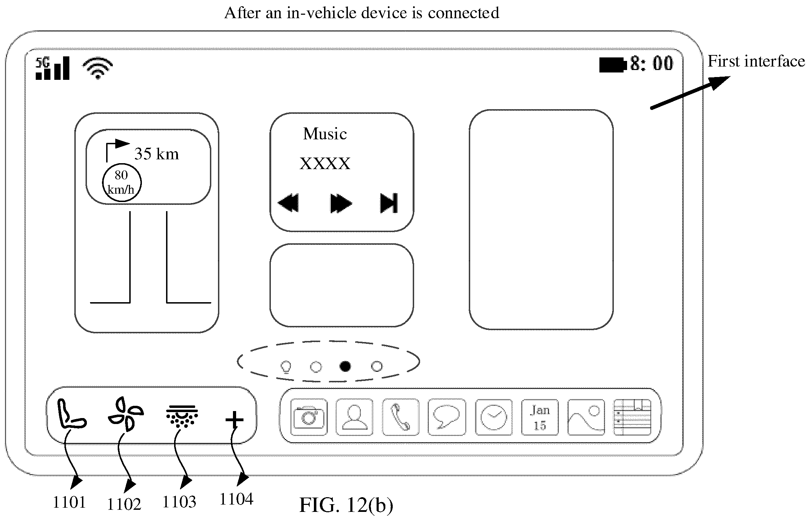

In some other embodiments, the first interface and the second interface are two different interfaces. For example, the first interface is a previous interface or a next interface of the second interface. For example, the first device has a plurality of layers of main interfaces, and when the first device is not connected to the second device, a second interface is displayed, where the second interface is an i^{th}-layer main interface. After the first device is connected to the second device, a first interface is displayed, where the first interface is an interface newly added in the plurality of layers of main interfaces, for example, a newly added interface between the i^{th}-layer main interface and an (i-1)^{th}-layer main interface, or a newly added interface between the i^{th}-layer main interface and an (i+1)^{th}-layer main interface. For example, refer to FIG. 12(a). The first device has three layers of main interfaces (because there are three points in the dashed line area), the second interface is a second-layer main interface (because the second point in the three points is selected), and main interfaces of the other two layers are not shown in a diagram in this application. After the first device is connected to the second device, a first interface in FIG. 12(b) is displayed, and the first interface is a third-layer main interface (because there are four points in the dashed line area and a third point is selected). Therefore, FIG. 12(a) and FIG. 12(b) are compared. A main interface in FIG. 12(a) has three layers, and a main interface in FIG. 12(b) is increased to four layers (because there are four points), that is, a layer of main interface is added between the original second-layer main interface and the original third-layer main interface, and the newly added main interface is the first interface. Therefore, the first interface is a next-layer main interface of the second interface.

In the example shown in FIG. 12(a) and FIG. 12(b), the first interface is the next-layer interface of the second interface. Therefore, when the first device displays the first interface, if the first device receives an interface switching operation, the first device may switch from the first interface to the second interface. FIG. 12(a) and FIG. 12(b) are used as an example. When the first device displays the first interface in FIG. 12(b), if the first device receives an interface switching operation (for example, a leftward sliding operation), the first device switches from the first interface to the second interface in FIG. 12(a). In other words, the first device displays the second interface before connecting to the second device, and displays the first interface after connecting to the second device. If the user wants to switch back to the original second interface, the user may switch back to the original second interface based on the touch control operation.

In addition, in the example shown in FIG. 12(a) and FIG. 12(b), there is an overlapping part between the first interface and the second interface. For example, FIG. 12(a) and FIG. 12(b) are compared. There are overlapping icons in dock bars of the first interface and the second interface. For example, the overlapping icon includes: an icon that is in the dock bar in the second interface and that is used by the user for more than a third preset quantity of times, and/or an icon that is in the dock bar in the second interface and that is recently used by the user. In other words, the first interface reserves an icon that is in the second interface and that is used for a large quantity of times and/or an icon that is in the second interface and that is recently used by the user. This is because a scenario in which the second interface is displayed when the first device is not connected to the second device, and the user performs an operation in the second interface to control the first device is considered. After the first device is connected to the second device, the first interface is displayed, and the user controls the second device in the first interface. If some display components (such as display components that are recently used or display components that are used for a large quantity of times) in the second interface are reserved in the first interface, the user may further control the first device in the first interface, and does not need to manually switch back from the first interface to the second interface to control the first device, and experience is good.

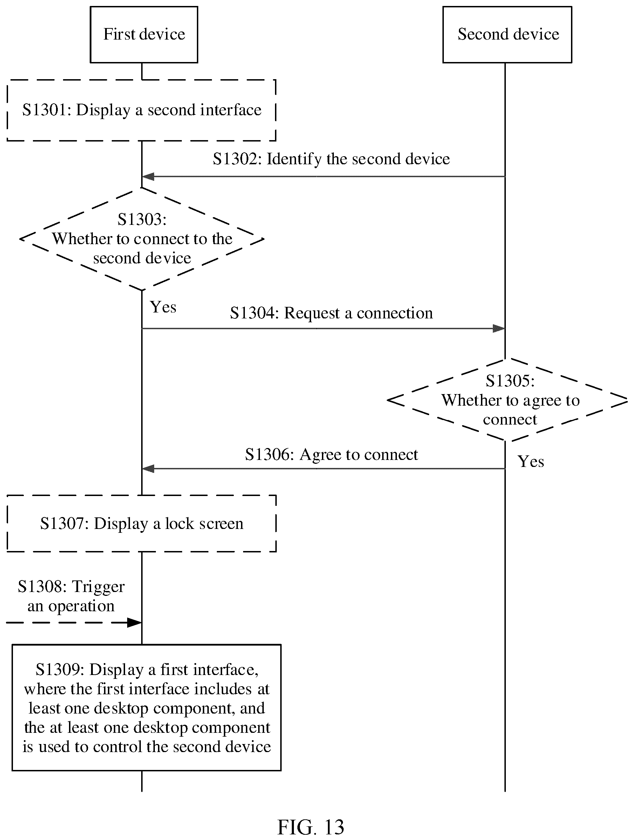

In the foregoing embodiment, after the first device is connected to the second device, the first device displays the first interface, and the second device may be controlled through the first interface. To improve security, in some other embodiments, when the first device is connected to the second device, verification may be further performed, to avoid that the second device can be controlled provided that any first device is connected to the second device. For example, FIG. 13 is a schematic flowchart of another device control method according to an embodiment of this application. As shown in FIG. 13, the procedure includes the following steps.

S1301: A first device (namely, a tablet computer) displays a second interface.

S1302: The first device identifies the second device (namely, an in-vehicle device).

For example, there are a plurality of manners in which the first device identifies the second device, for example, including but not limited to at least one of the following manners A to C.

Manner A: For example, the first device is a tablet computer and the second device is an in-vehicle device. A holder is disposed behind a front seat of the in-vehicle device, and the holder is configured to support a personal mobile device. If it is detected that the tablet computer is disposed on the holder of the in-vehicle seat, the tablet computer identifies the in-vehicle device. In this manner, for an automobile seller, only a vehicle equipped with the holder (for example, in front of a front passenger seat or in rear of a front seat) may be sold. In this way, a selling price can be reduced, and a purchase strength of a consumer can be improved. In addition, for a consumer, a tablet computer of the consumer may be used as a part of the in-vehicle device, and the in-vehicle device is controlled through a plurality of applications and a plurality of functions of the tablet computer. This improves in-vehicle interaction experience.

Manner B: For example, the first device is a tablet computer, and the second device is an in-vehicle device. The tablet computer is connected to the in-vehicle device through a USB. For example, a user charges the tablet computer in a vehicle. In this case, the tablet computer identifies the in-vehicle device.

Manner C: For example, the first device is a tablet computer and the second device is an in-vehicle device. When the tablet computer is in a wireless signal coverage area of the in-vehicle device, and/or when a distance from the tablet computer to the in-vehicle device is less than a preset distance, the tablet computer identifies the in-vehicle device.

S1303: The first device outputs first prompt information, to indicate whether to connect to the second device. If the first device is connected to the second device, S1304 is performed.

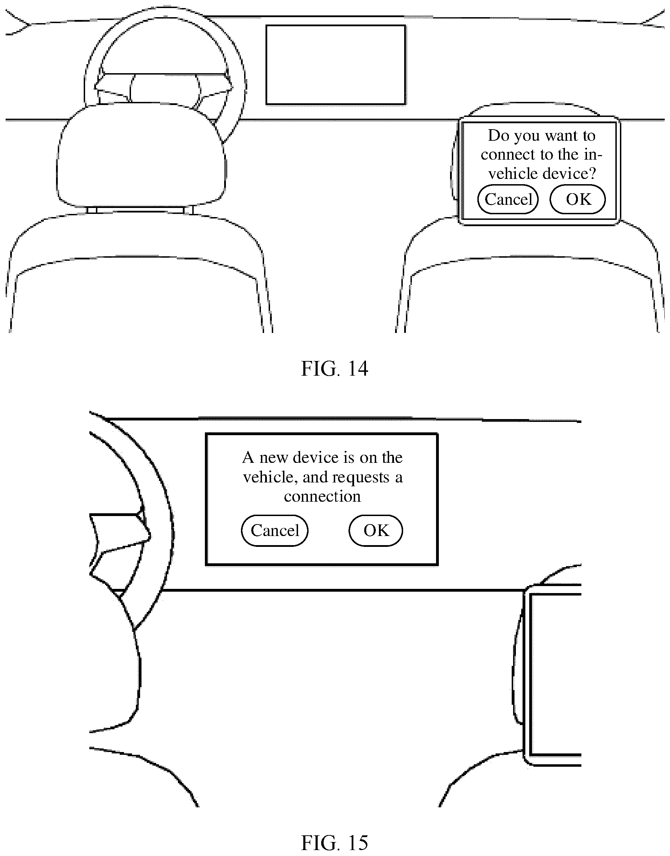

For example, with reference to FIG. 14, after the user disposes the tablet computer on the holder in rear of a front seat, the tablet computer displays prompt information "Do you want to establish a connection to this new environment (or in-vehicle)?", and further displays an "OK" button and a "Cancel" button.

S1304: If the first device receives an indication for determining to connect to the second device, the first device sends a connection request to the second device.

FIG. 14 is still used as an example. If the tablet computer receives an indication for determining to connect to the in-vehicle device (for example, the user taps the "OK" button or enters, through a voice input, an instruction for confirming the connection), the tablet computer sends a connection request to the in-vehicle device.

S1305: The second device outputs second prompt information, and the second prompt information indicates whether to agree to connect. If yes, S1306 is performed.

For example, with reference to FIG. 15, the in-vehicle central display screen displays prompt information "a new device is on the vehicle, and requests to connect", and further displays a "Cancel" button and an "OK" button.

S1306: If the second device receives the connection agreement instruction, the second device sends a connection agreement indication to the first device.

FIG. 15 is still used as an example. The in-vehicle device receives the connection agreement instruction (for example, the driver taps the "OK" button or enters, through a voice input, the connection agreement instruction), and sends the connection agreement indication to the tablet computer.

It should be noted that, the two steps S1303 and S1305 may be both performed, or may not be performed, or only one of the two steps needs to be performed. Therefore, the two steps in FIG. 13 are represented by dashed lines.

S1307: The first device displays a lock screen.

S1308: The first device receives a trigger operation.

S1309: The first device displays a first interface, where the first interface includes at least one desktop component, and the at least one desktop component is used to control the second device.

An implementation principle of S1307 to S1309 is the same as an implementation principle of S803 to S805 in FIG. 8. For brevity, details are not described.

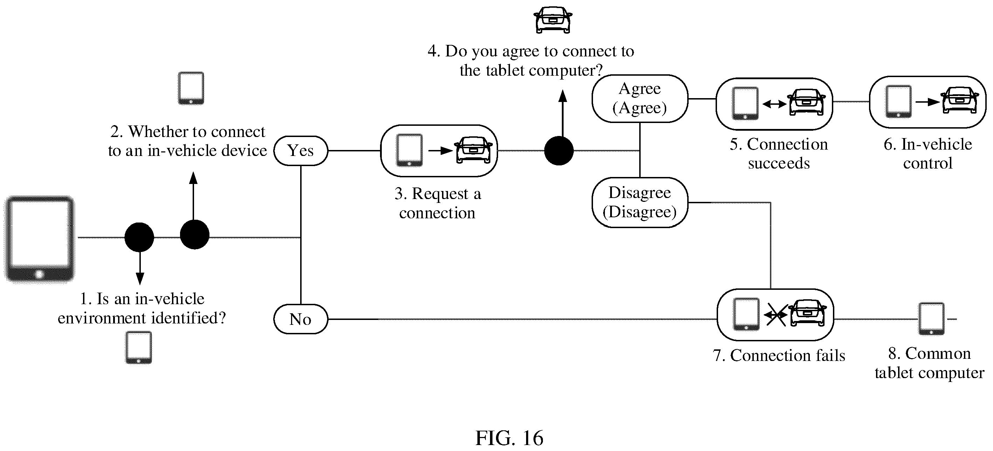

For ease of understanding, FIG. 16 is a diagram of an operation procedure of connecting a first device to a second device. As shown in FIG. 16, the operation procedure includes the following steps. Step 1: A tablet computer identifies a new environment (namely, an in-vehicle device). Step 2: The tablet computer prompts whether to connect to the in-vehicle device. If the tablet computer receives a confirmation indication, step 3 is performed: The tablet computer requests a connection to the in-vehicle device. Step 4: The in-vehicle device prompts whether to agree the connection between the tablet computer and the in-vehicle device. If yes, step 5 is performed. Step 5: Connect the tablet computer to the in-vehicle device. Step 6: The tablet computer controls some functions of the in-vehicle device. If the tablet computer receives a cancellation indication in step 2, or the in-vehicle device receives a rejection indication in step 5, step 7 is performed. Step 7: The tablet computer fails to connect to the in-vehicle device. Step 8: The tablet computer is used as a common tablet computer, that is, is not used as a part of the head unit, and cannot control a function of the head unit.

If the device control procedure shown in FIG. 8 is referred to as Solution 1, and the device control procedure shown in FIG. 13 is referred to as Solution 2. The first device may use either Solution 1 or Solution 2. Alternatively, the user may select one solution from the two solutions (for example, Solution 1 is selected to improve efficiency, and Solution 2 is selected to improve security), and the first device uses the solution selected by the user. Alternatively, when the first device is connected to the second device for the first time, Solution 2 is used to ensure security. When the first device is not connected to the second device for the first time, Solution 1 is used to improve efficiency.

In the foregoing embodiment, after the tablet computer is connected to the in-vehicle device, the tablet computer displays the first interface, where the first interface includes at least one desktop component, and the in-vehicle device may be controlled by using the desktop component. The following embodiments describe several examples of controlling the in-vehicle device by the tablet computer.

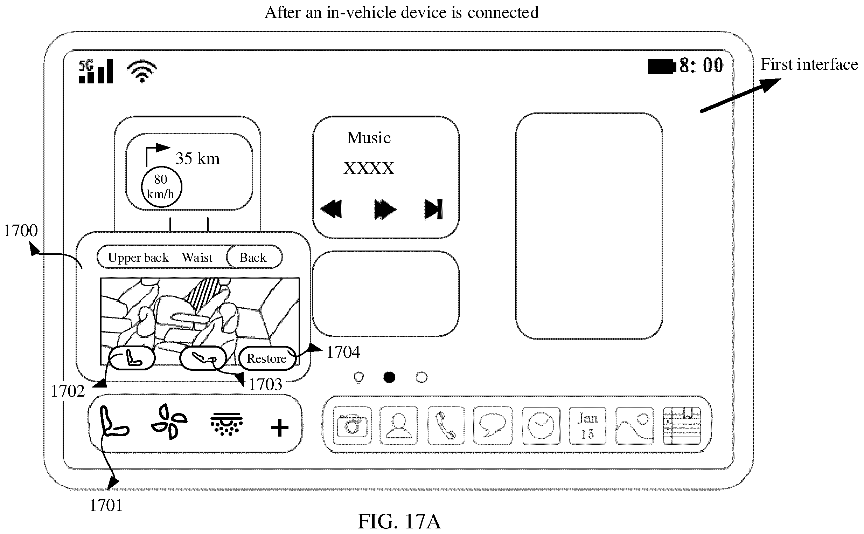

For example, with reference to FIG. 17A, the first device displays a first interface, where the first interface includes an icon 1701, and the icon 1701 is used to control an in-vehicle seat. For example, when detecting that a user taps the icon 1701, the first device may display a widget 1700. The widget 1700 includes related options, for seat adjustment, as "upper back", "waist", and "back". When the user selects "back", the back of the seat in the picture is highlighted (for example, indicated by a diagonal line), to indicate that the back of the seat is currently adjusted. For another example, the widget 1700 further displays an icon 1702, an icon 1703, and an icon 1704. The icon 1702 indicates that the seat is upright, the icon 1703 indicates that the seat lies flat, and the icon 1704 indicates that the seat is restored.

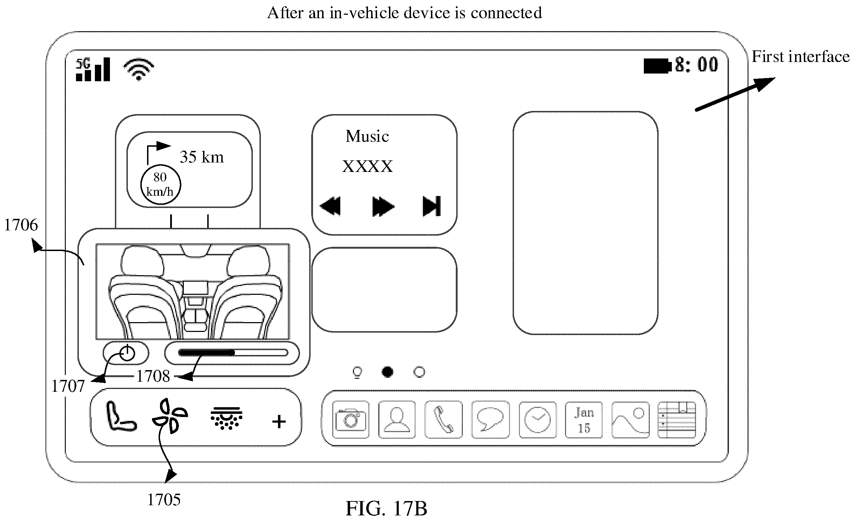

For another example, as shown in FIG. 17B, the first device displays a first interface, where the first interface includes an icon 1705, and the icon 1705 is used to control an in-vehicle air conditioner. For example, when detecting that the user taps the icon 1705, the first device may display a widget 1706. The widget 1706 includes related options, for air conditioner adjustment, such as an "On" button 1707 and a wind speed adjustment bar 1708 that is used to adjust a value of a wind speed.

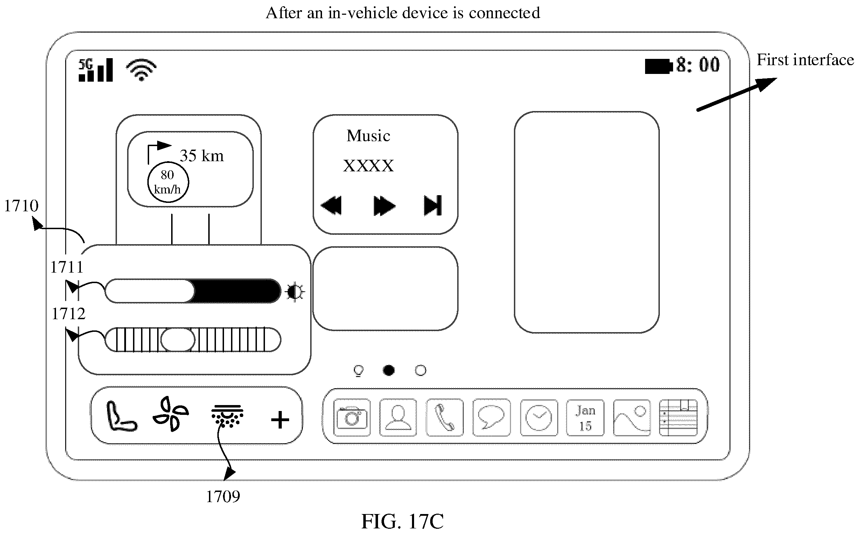

For another example, as shown in FIG. 17C, the first device displays a first interface, where the first interface includes an icon 1709, and the icon 1709 is used to control an in-vehicle light. For example, when detecting that the user taps the icon 1709, the first device may display a widget 1710. The widget 1710 includes related options, for light adjustment, such as a brightness adjustment bar 1711 that is used to adjust light brightness and a light color adjustment bar 1712 that is used to adjust a light color.

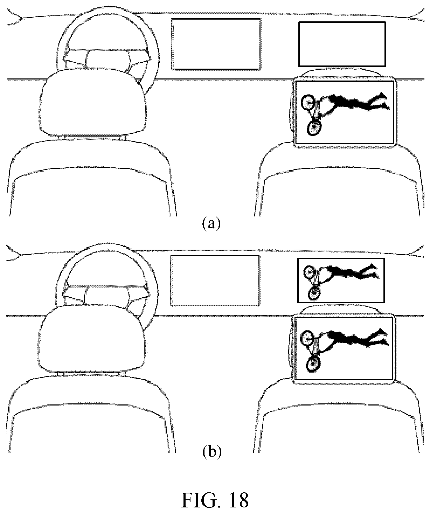

In some embodiments, the first device may send display content on the first device to the second device, so that the second device and the first device display the same content. For example, a rear-seat passenger may project displayed content on the tablet computer (the first device) to a central display screen or a front passenger screen (the second device). For example, with reference to (a) in FIG. 18, a video playback interface is opened on the rear-seat tablet computer, and a video is being played in the interface. When receiving an operation of projection to the front passenger screen, the tablet computer sends the video playback interface to the front passenger screen, for example, (b) in FIG. 18. In this way, the rear-seat passenger and the front passenger screen can watch a same video at the same time. An operation of projection from the rear-seat tablet computer to the front passenger screen is not limited in this application.

Optionally, after the first device (for example, the rear-seat tablet computer in FIG. 18) projects the displayed content to the second device (for example, the front passenger screen in FIG. 18), the first device may further control the second device to disable a screen touch function, and/or when the user on the first device receives an operation, the projected content on the second device may be controlled. FIG. 18 is still used as an example. When the rear-seat passenger controls accelerated playing of a video on the tablet computer, playing of a video on the front passenger screen is synchronously accelerated; or when the rear-seat passenger controls decelerated playing of a video on the tablet computer, playing of a video on the front passenger screen is synchronously decelerated.

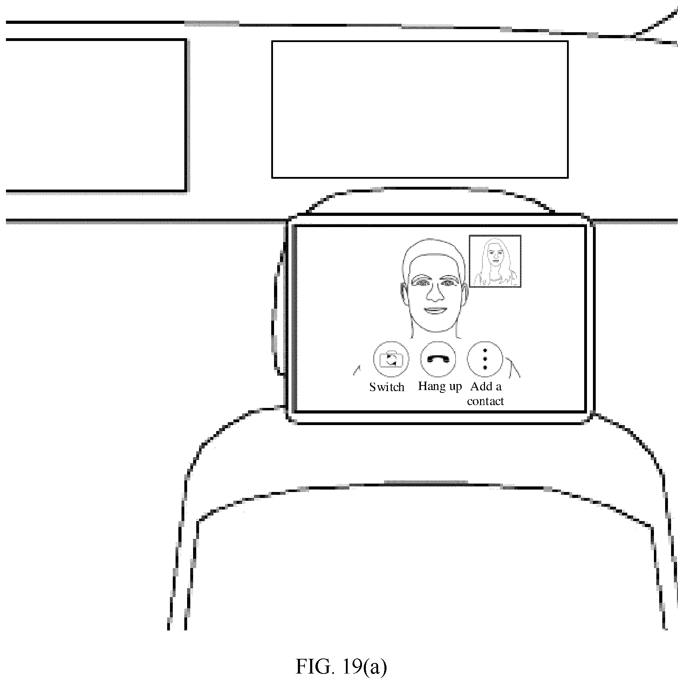

In some other embodiments, the first device (for example, the rear-seat tablet computer in FIG. 18) may further invoke hardware such as a camera and a microphone on the second device (for example, the front passenger screen in FIG. 18). For example, with reference to FIG. 19(a), a tablet computer of a rear-seat passenger (a first device) displays a video call screen with a contact, and the video call screen includes an image captured by a camera on the tablet computer. The video call screen includes a button for adding a contact. It is assumed that the tablet computer receives an operation on the button, controls a camera corresponding to the front passenger to be started, and transmits the captured image to the tablet computer. In this way, the tablet computer adds, to the video call screen, the image captured by the camera corresponding to the front passenger. Simply speaking, the rear-seat passenger adds the front passenger to the video call by invoking the camera for the front passenger during a video call with a contact through a tablet computer.

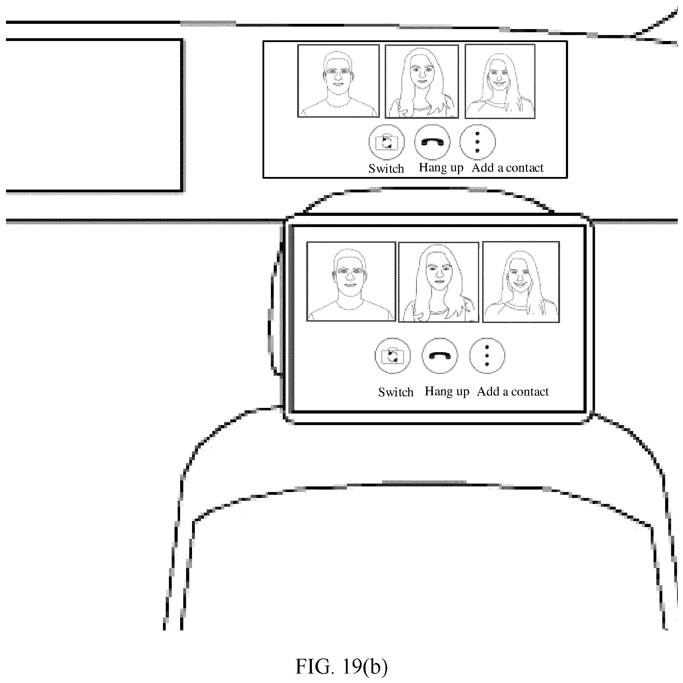

Optionally, still with reference to FIG. 19(b), after the front passenger is added to the video call screen of the tablet computer, the video call screen for three persons may also be synchronously displayed on the front passenger screen.

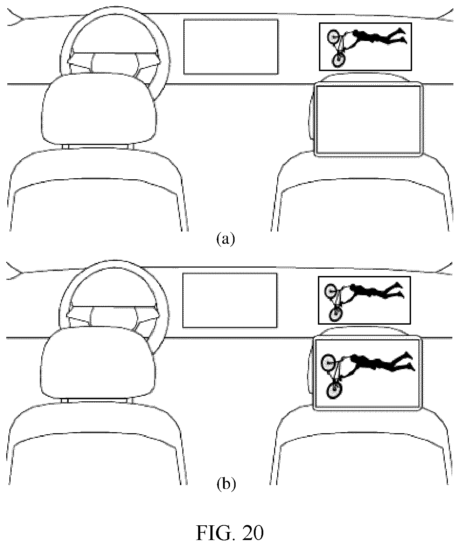

In the foregoing embodiment, for example, the first device (the rear-seat tablet computer) performs projection to the second device (the front passenger screen). In some other embodiments, the second device may further project a screen to the first device. An example scenario includes: a mother sits in the front passenger, and a child sits in a rear seat. The mother may project content on the front passenger screen (the second device) to the rear-seat tablet computer (the first device) for the child to watch. For example, with reference to (a) in FIG. 20, a video playback interface is opened on the front passenger screen, and a video is being played in the interface. When receiving an operation of projection to the rear-seat tablet computer, the front passenger screen sends the video playback interface to the tablet computer, as shown in (b) in FIG. 20. In this way, the child in the rear seat and the mother in the front passenger can watch a same video at the same time.

Optionally, after the second device (for example, the front passenger screen in FIG. 20) projects the display content to the first device (for example, the rear-seat tablet computer in FIG. 20), the second device may further control the first device to disable a screen touch function, and/or when receiving a user operation, the projected content on the first device may be controlled. For example, as shown in (b) in FIG. 20, the mother in the front passenger may control, through the front passenger screen, pause, acceleration, deceleration, and the like of a video on the tablet computer for the child in the rear seat.

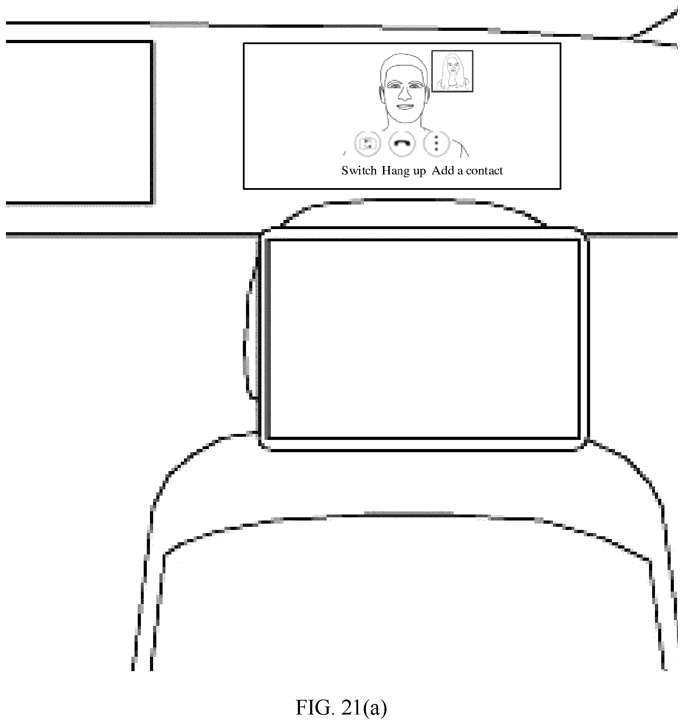

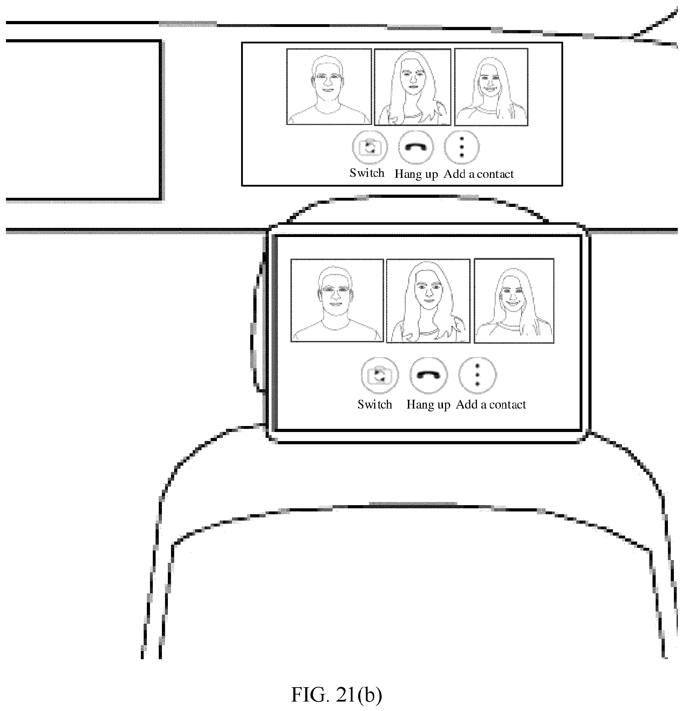

Similarly, the second device (for example, the front passenger screen in FIG. 20) may also invoke hardware of the first device (for example, the rear-seat tablet computer in FIG. 20), for example, a camera or a microphone. The foregoing example is still used as an example. If the mother in the front passenger performs a video call with a contact (for example, the grandmother of the child) through the front passenger screen (the second device), the mother in the front passenger may also control the camera of the rear-seat tablet computer (namely, the first device) to be started, in addition, the rear-seat tablet computer is controlled to send an image (for example, an icon of the child in the rear seat) captured by the camera to the front passenger screen, so that the image of the child in the rear seat is added to a video call screen of the front passenger screen. For example, with reference to FIG. 21(a), a video call screen with a contact is displayed on the front passenger screen (the second device), and the video call screen includes an image captured by a camera of the front passenger (that is, an image of the mother in the front passenger). The video call screen includes a button for adding a contact. It is assumed that the front passenger screen receives an operation on the button, controls the rear-seat tablet computer (the first device) to start a camera, and transmits the captured image to the front passenger screen. In this way, the front passenger screen adds, to the video call screen, the image (that is, the image of the child in the rear seat) captured by the camera of the tablet computer, as shown in FIG. 21(b). Simply speaking, when the mother in the front passenger makes a video call with a contact through the front passenger screen, the mother invokes the camera of the rear-seat passenger tablet computer to add the child in the rear seat to the video call.

Optionally, still with reference to FIG. 21(b), after the rear-seat passenger is added to the video call screen of the front passenger screen, the rear-seat tablet computer may also synchronously display the video call screen for the three persons.

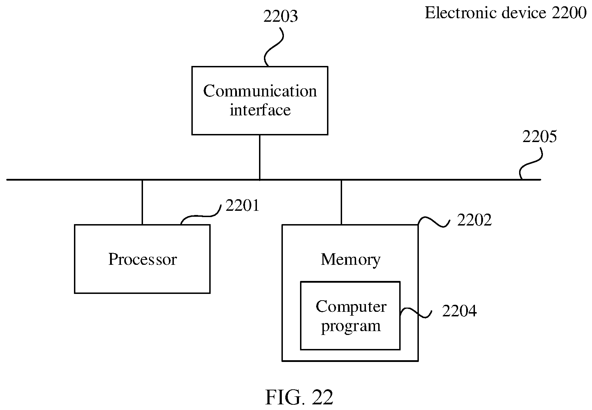

FIG. 22 is a diagram of a structure of an electronic device 2200 according to an embodiment of this application. The electronic device 2200 may be the first device or the second device described above. As shown in FIG. 22, the electronic device 2200 may include one or more processors 2201, one or more memories 2202, a communication interface 2203, and one or more computer programs 2204. The foregoing components may be connected by using one or more communication buses 2205. The one or more computer programs 2204 are stored in the memory 2202 and are configured to be executed by the one or more processors 2201, and the one or more computer programs 2204 include instructions. For example, when the electronic device 2200 is the foregoing first device, the instructions may be used to perform related steps of the first device in the foregoing corresponding embodiments, for example, steps of the first device in the embodiment shown in any one of FIG. 8 to FIG. 13. For another example, when the electronic device 2200 is the foregoing second device, the instructions may be used to perform related steps of the second device in the foregoing corresponding embodiments, for example, steps of the second device in the embodiment shown in any one of FIG. 8 to FIG. 13. The communication interface 2203 is configured to implement communication between the electronic device 2200 and another device. For example, the communication interface may be a transceiver.

In the foregoing embodiments provided in this application, the method provided in embodiments of this application is described from a perspective of an electronic device (for example, a tablet computer, a head unit, a speaker, or a printer) as an execution body. To implement functions in the foregoing method provided in embodiments of this application, the electronic device may include a hardware structure and/or a software module, and the foregoing functions are implemented in a form of a hardware structure, a software module, or a combination of a hardware structure and a software module. Whether a function in the foregoing functions is performed by using the hardware structure, the software module, or the combination of the hardware structure and the software module depends on particular applications and design constraints of the technical solutions.

According to the context, the term "when" or "after" used in the foregoing embodiments may be interpreted as a meaning of "if" or "after" or "in response to determining" or "in response to detecting". Similarly, according to the context, the phrase "when it is determined that" or "if (a stated condition or event) is detected" may be interpreted as a meaning of "if it is determined that", "in response to determining", "when (a stated condition or event) is detected", or "in response to detecting (a stated condition or event)". In addition, in the foregoing embodiments, relationship terms such as first and second are used to distinguish one entity from another entity, but do not limit any actual relationship and sequence between these entities.

Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedure or functions according to embodiments the present invention are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, and microwave, or the like) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, DVD), a semiconductor medium (for example, a solid-state drive (Solid-State drive, SSD)), or the like. In a case in which no conflict occurs, the solutions in the foregoing embodiments may be combined for use.

It should be noted that a part of this patent application document includes copyright-protected content. A copyright owner reserves the copyright except copies made for the patent document or the recorded content of the patent document in the China National Intellectual Property Administration.

## Claims

1. A device control method, comprising:
connecting a first device to a second device; and
displaying a first interface on a display of the first device, wherein the first interface comprises at least one desktop component, and the at least one desktop component is used to control a function of the second device.

2. The method according to claim 1, wherein before the connecting a first device to a second device, the method further comprises:
displaying, by the first device, a second interface, wherein the second interface is a local interface of the first device; and
the displaying a first interface on a display of the first device comprises:
when the first device determines that the first device is successfully connected to the second device, automatically switching from the second interface to the first interface.

3. The method according to claim 1 or 2, wherein before the displaying a first interface on a display of the first device, the method further comprises:
displaying, by the first device, a lock screen, wherein the lock screen comprises first prompt information, and the first prompt information indicates that the first device is successfully connected to the second device; and
the displaying a first interface on a display of the first device comprises:
displaying, by the first device, the first interface in response to an operation in the lock screen.

4. The method according to any one of claims 1 to 3, wherein the first interface comprises a dock dock bar, and the at least one desktop component is located in the dock dock bar.

5. The method according to any one of claims 2 to 4, wherein
the first interface is obtained by adding the at least one desktop component to a blank area in the second interface; or
the first interface is obtained by displaying the at least one desktop component in a first area after displaying of information in the first area in the second interface is cancelled.

6. The method according to claim 5, wherein that the first interface is obtained by displaying the at least one desktop component in a first area after displaying of information in the first area in the second interface is cancelled comprises:
the first area is an area in which a dock bar in the second interface is located, and the first area comprises M icons corresponding to M applications in the first device, wherein M is a positive integer; and
the first interface is obtained by cancelling displaying of N icons in the M icons, and the at least one desktop component is displayed at locations of the N icons, wherein N is a positive integer less than or equal to M.

7. The method according to claim 6, wherein the N icons meet at least one of the following conditions:
N applications corresponding to the N icons are applications whose use frequencies are lower than a first preset frequency in the M applications; or
N applications corresponding to the N icons are not applications recently used by a user; or
N applications corresponding to the N icons are not system default applications or user-specified applications.

8. The method according to any one of claims 2 to 4, wherein the first interface is a previous interface or a next interface of the second interface.

9. The method according to claim 8, wherein that the first interface is a previous interface or a next interface of the second interface comprises:
the first device comprises K layers of main interfaces, wherein K is a positive integer; the second interface is an i^{th} layer in the K layers of main interfaces, wherein i is a positive integer between 1 and K; and the first interface is a newly added interface between the i^{th} layer and an (i+1)^{th} layer, or a newly added interface between the i^{th} layer and an (i-1)^{th} layer.

10. The method according to claim 8 or 9, wherein the first interface and the second interface overlap, and an overlapping portion comprises: a display component that is in the second interface and that is used by a user for a quantity of times greater than a third preset quantity of times, and/or a display component that is in the second interface and that is recently used by the user.

11. The method according to any one of claims 8 to 10, wherein the method further comprises:
receiving, by the first device, an interface switching operation; and
switching, by the first device, from the first interface to the second interface on the display in response to the interface switching operation.

12. The method according to any one of claims 1 to 11, wherein the second device is an in-vehicle infotainment system, and the at least one desktop component comprises at least one of a first desktop component, a second desktop component, a third desktop component, or a fourth desktop component; and
the first desktop component is used to control a seat of the in-vehicle infotainment system, the second desktop component is used to control an air conditioner of the in-vehicle infotainment system, the third desktop component is used to control a light of the in-vehicle infotainment system, and the fourth desktop component is used to add another control function for the in-vehicle infotainment system.

13. The method according to any one of claims 1 to 11, wherein the second device is a speaker, and the at least one desktop component comprises at least one of a first desktop component, a second desktop component, a third desktop component, or a fourth desktop component; and
the first desktop component is used to control volume of the speaker, the second desktop component is used to control the speaker to start or stop playing, the third desktop component is used to control a next song or a previous song of the speaker, and the fourth desktop component is used to add another control function for the speaker.

14. The method according to any one of claims 1 to 11, wherein the second device is a printing device, and the at least one desktop component comprises at least one of a first desktop component, a second desktop component, a third desktop component, or a fourth desktop component; and
the first desktop component is used to control starting or stopping of the printing device, the second desktop component is used to control pausing or continuing of the printing device, the third desktop component is used to control a printing color of the printing device, and the fourth desktop component is used to add another control function for the printing device.

15. The method according to any one of claims 1 to 14, wherein the method further comprises:
when the first device displays a third interface, controlling, by the first device in response to a first operation, the second device to display the third interface; or
when the second device displays a fourth interface, controlling, by the second device in response to a second operation, the first device to display the fourth interface.

16. The method according to claim 15, wherein after the controlling, by the first device in response to a first operation, the second device to display the third interface, the method further comprises at least one of the following steps:
controlling, by the first device in response to a third operation, the second device to disable a display touch function; or
controlling, by the first device, display content in the third interface on the second device in response to a fourth operation.

17. The method according to claim 15, wherein after the controlling, by the second device in response to a second operation, the first device to display the fourth interface, the method further comprises:
controlling, by the second device in response to a fifth operation, the first device to disable a display touch function; or
controlling, by the second device, display content in the fourth interface on the first device in response to a sixth operation.

18. The method according to any one of claims 1 to 17, wherein the method further comprises:
displaying, by the first device, a first video call screen, wherein the first video call screen comprises an image captured by a first camera on the first device, and the first video call screen comprises a button for adding a contact;
when receiving an operation on the button, controlling, by the first device, the second device to start a second camera on the second device and transmit an image captured by the second camera to the first device; and
adding, by the first device, the image captured by the second camera to the first video call screen.

19. The method according to claim 18, wherein the method further comprises:
displaying, by the second device, a second video call screen, wherein the second video call screen comprises the image captured by the first camera and the image captured by the second camera.

20. The method according to any one of claims 1 to 19, wherein the connecting a first device to a second device comprises:
displaying, by the first device, second prompt information when identifying the second device, wherein the second prompt information indicates whether to connect to the second device;
sending, by the first device, a connection request to the second device when receiving an indication for determining to connect to the second device;
displaying, by the second device, third prompt information after receiving the connection request, wherein the third prompt information indicates whether to agree to connect to the first device; and
connecting, by the second device, to the first device when receiving an agreement indication.

21. A communication system, comprising a first device and a second device, wherein
the first device is configured to perform the steps of the first device in the method according to any one of claims 1 to 20; and
the second device is configured to perform the steps of the second device in the method according to any one of claims 1 to 20.

22. An electronic device, comprising:
a processor, a memory, and one or more programs, wherein
the one or more programs are stored in the memory, the one or more programs comprise instructions, and when the instructions are executed by the processor, the electronic device is enabled to perform the steps of the method according to any one of claims 1 to 20.

23. A computer-readable storage medium, wherein the computer-readable storage medium is configured to store a computer program, and when the computer program is run on a computer, the computer is enabled to perform the method according to any one of claims 1 to 20.
